# EUROPÄISCHE PATENTANMELDUNG

(11) **EP 3 689 580 A1**
(43) Veröffentlichungstag der Anmeldung: **05.08.2020**
(21) Anmeldenummer: 20162947.4
(22) Anmeldetag: 04.05.2016
(51) Int. Cl.: B29C 64/118, B29C 64/209, B29C 64/236, B33Y 10/00, B33Y 30/00, B33Y 40/00, B41J 2/51

(54) **VERFAHREN ZUR BILDUNG EINES DREIDIMENSIONALEN OBJEKTES**

(30) Priorität: 06.05.2015 AT 503662015
(62) Teilanmeldung aus: 16722123.3
(71) Anmelder: Xioneer Systems GmbH, 1220 Wien (AT)
(72) Erfinder: Neboian, Andrei, 1220 Wien (AT)
(74) Vertreter: Puchberger & Partner Patentanwälte

(57) **Zusammenfassung**

Verfahren zur Bildung eines formstabilen, dreidimensionalen Objektes durch konsekutives oder kontinuierliches Auftragen und Aushärten eines formbaren Druckmaterials.

## Beschreibung

Die Erfindung betrifft ein Verfahren zur Bildung eines formstabilen, dreidimensionalen Objektes durch konsekutives oder kontinuierliches Auftragen und Aushärten eines formbaren Druckmaterials, insbesondere ein Verfahren zur Überwachung der Druckmaterialförderung.

Die Erfindung betrifft insbesondere einen 3D-Drucker, der nach dem FFF-Verfahren, also nach dem sogenannten "fused filament fabrication"-Verfahren arbeitet. Bei dieser Art der 3D-Drucker wird ein schmelzbares, insbesondere drahtförmiges oder filamentförmiges Druckmaterial in einem Druckkopf aufgeschmolzen und durch gezieltes, mehrlagiges, punktförmiges und/oder streifenförmiges Auftragen und Aushärten zu einem gewünschten dreidimensionalen Objekt umgeformt.

Gattungsähnliche 3D-Drucker sind in unterschiedlichen Ausführungsformen bekannt und publiziert. Beispielsweise sind Filamentdrucker bekannt, bei denen eine beheizte Düse gegenüber einer Basis bewegt werden kann, um das aufgeschmolzene Druckmaterial in gewünschter Form aufzutragen. Nachteilig an diesen herkömmlichen Vorrichtungen ist, dass während eines durchgängigen Druckvorgangs lediglich ein einziges Druckmaterial aufgetragen werden kann. Da jedoch bei komplexeren dreidimensionalen Objekten eine Stützstruktur notwendig sein kann, oder da gegebenenfalls unterschiedliche Druckmaterialien zum Aufbau des 3D-Objekts notwendig sind, besteht eine Nachfrage nach 3D-Druckern, die während eines durchgängigen Druckvorgangs zumindest zwei unterschiedliche Druckmaterialien umformen können. Zur Lösung dieses Problems sind sogenannte Zweikopfdrucker bekannt, bei denen zwei Druckköpfe mit zwei unterschiedlichen Druckmaterialien beschickt werden, wobei beide Druckköpfe ständig mit der Antriebseinheit verbunden sind. Nachteilig an diesen Systemen ist, dass durch den zweiten Druckkopf die bewegten Massen stark erhöht werden. Aufgrund der erhöhten Massen werden auch stärkere und somit größere Antriebe benötigt, was zu einer weiteren Erhöhung der Masse führt. Insbesondere sind gemäß Stand der Technik die Linearantriebe zur Bewegung der Druckköpfe auf bewegten Komponenten des Druckers angeordnet, wodurch die zu bewegenden Massen vervielfacht werden. Dies hat einen negativen Einfluss auf die Druckgeschwindigkeit und auf die Druckgenauigkeit des 3D-Druckers.

Aufgabe der Erfindung ist es nun, die Nachteile des Standes der Technik zu überwinden. Dies umfasst insbesondere, dass der erfindungsgemäße Drucker zur Durchführung eines effizienten Druckverfahrens geeignet ist.

Die erfindungsgemäße Aufgabe wird insbesondere durch die Merkmalskombinationen der unabhängigen Patentansprüche gelöst.

Gegebenenfalls betrifft die Erfindung eine Vorrichtung zur Bildung eines formstabilen, dreidimensionalen Objektes durch konsekutives oder kontinuierliches Auftragen und Aushärten eines formbaren Druckmaterials, insbesondere FFF-3D-Drucker, umfassend:
- einen als Basis für den Aufbau des Objektes wirkenden Basiskörper,
- mindestens einen Druckkopf zum Auftragen des Druckmaterials,
- eine Bewegungsvorrichtung zur Änderung der relativen Lage des Druckkopfes gegenüber dem Basiskörper, und
- mindestens ein Druckmaterialreservoir zur Aufnahme des Druckmaterials und zur Ausgabe des Druckmaterials an den Druckkopf.

Gegebenenfalls betrifft die Erfindung ein Verfahren zur Bildung eines formstabilen, dreidimensionalen Objektes durch konsekutives oder kontinuierliches Auftragen und Aushärten eines formbaren Druckmaterials, insbesondere zur Bildung eines formstabilen, dreidimensionalen Objektes durch konsekutives oder kontinuierliches Auftragen und Aushärten zweier formbarer Druckmaterialien, und insbesondere Verfahren zum Druckkopfwechsel, umfassend folgende Schritte:
- Bewegen des Antriebsschlittens und des mit dem Antriebsschlitten über eine Kupplungsvorrichtung gekuppelten ersten Druckkopfs zu einem zweiten Druckkopf, der sich in einer im Endbereich des ersten Trägerelements angeordneten Parkposition befindet und dort von einer Haltevorrichtung temporär arretiert ist,
- Kuppeln des zweiten Druckkopfs mit dem Antriebsschlitten über die Kupplungsvorrichtung, sodass der Antriebsschlitten mit beiden Druckköpfen verbunden ist,
- Lösen der Haltevorrichtung des zweiten Druckkopfs, sodass der zweite Druckkopf aus seiner Parkposition bewegt werden kann,
- Bewegen des Antriebsschlittens und der beiden mit dem Antriebsschlitten über die Kupplungsvorrichtung gekuppelten Druckköpfe zu der Parkposition des ersten Druckkopfs am gegenüberliegenden Endbereich des ersten Trägerelements,
- Schließen der Haltevorrichtung des ersten Druckkopfs und Lösen des ersten Druckkopfs vom Antriebsschlitten durch Lösen der Kupplungsvorrichtung, sodass der erste Druckkopf in seiner Parkposition arretiert ist,
- Bewegen des Antriebsschlittens und des mit dem Antriebsschlitten über die Kupplungsvorrichtung gekuppelten zweiten Druckkopfs.

Gegebenenfalls betrifft die Erfindung ein Verfahren zur Bildung eines formstabilen, dreidimensionalen Objektes durch konsekutives oder kontinuierliches Auftragen und Aushärten eines formbaren Druckmaterials, insbesondere zur Bildung eines formstabilen, dreidimensionalen Objektes durch konsekutives oder kontinuierliches Auftragen und Aushärten zweier formbarer Druckmaterialien, und insbesondere Verfahren zum Druckkopfwechsel, umfassend folgende Schritte:
- Bewegen des Antriebsschlittens und des mit dem Antriebsschlitten über eine Kupplungsvorrichtung gekuppelten ersten Druckkopfs zu der Parkposition des ersten Druckkopfs am Endbereich des ersten Trägerelements, Schließen der Haltevorrichtung des ersten Druckkopfs und Lösen des ersten Druckkopfs vom Antriebsschlitten durch Lösen der Kupplungsvorrichtung, sodass der erste Druckkopf in seiner Parkposition arretiert ist, Bewegen des Antriebsschlittens zu einem zweiten Druckkopf, der sich in einer im gegenüberliegenden Endbereich des ersten Trägerelements angeordneten Parkposition befindet und dort von einer Haltevorrichtung temporär arretiert ist, Kuppeln des zweiten Druckkopfs mit dem Antriebsschlitten über die Kupplungsvorrichtung, Lösen der Haltevorrichtung des zweiten Druckkopfs, sodass der zweite Druckkopf aus seiner Parkposition bewegt werden kann, und Bewegen des Antriebsschlittens und des mit dem Antriebsschlitten über die Kupplungsvorrichtung gekuppelten zweiten Druckkopfs.

Gegebenenfalls betrifft die Erfindung ein Verfahren zur Bildung eines formstabilen, dreidimensionalen Objektes durch konsekutives oder kontinuierliches Auftragen und Aushärten eines formbaren Druckmaterials, insbesondere Verfahren zur Kalibrierung einer Vorrichtung, wobei die Vorrichtung zur Bildung eines formstabilen, dreidimensionalen Objektes eingerichtet ist, wobei das Objekt insbesondere durch konsekutives oder kontinuierliches Auftragen und Aushärten eines formbaren Druckmaterials gebildet wird, und wobei die Vorrichtung einen als Basis für den Aufbau des Objektes wirkenden Basiskörper, mindestens einen Druckkopf zum Auftragen des Druckmaterials, und eine Bewegungsvorrichtung zur Änderung der relativen Lage des Druckkopfes gegenüber dem Basiskörper aufweist, umfassend folgende Schritte:
- Positionieren eines Druckkopfes entlang der x-y-Ebene an einem ersten Kalibrierpunkt,
- Verringern des Abstandes zwischen Basiskörper und Druckkopf, bis der Basiskörper ein Kalibrierreferenzelement des Druckkopfs berührt,
- und Detektieren der Berührung zwischen dem Basiskörper und dem Kalibrierreferenzelement.

Dabei kann es von Vorteil sein, wenn bei der Kalibrierung der Vorrichtung mithilfe eines Druckkopfs ein weiterer Druckkopf in seiner Parkposition angeordnet ist, die sich bevorzugt außerhalb des Druckbereichs befindet.

Gegebenenfalls betrifft die Erfindung ein Verfahren zur Bildung eines formstabilen, dreidimensionalen Objektes durch konsekutives oder kontinuierliches Auftragen und Aushärten eines formbaren Druckmaterials, insbesondere Verfahren zur Überwachung der Druckmaterialförderung, umfassend folgende Schritte:
- Betätigen eines Antriebsrades eines Druckmaterialantriebs zur Förderung des Druckmaterials,
- Messung der rückwirkenden Motorspannung des Druckmaterialantriebs,
- Vergleichen der rückwirkenden Motorspannung mit einem Sollwert oder einem Sollbereich, insbesondere Vergleichen einer gleitenden Standardabweichung der rückwirkenden Motorspannung mit einem Sollwert oder einem Sollbereich,
- Einleiten eines alternativen Betriebsmodus oder eines Reinigungsmodus, wenn der Wert oder die gleitende Standardabweichung der rückwirkenden Motorspannung vom Sollwert oder von dem Sollbereich abweicht.

Gegebenenfalls betrifft die Erfindung eine Vorrichtung zur Bildung eines formstabilen, dreidimensionalen Objektes durch konsekutives oder kontinuierliches Auftragen und Aushärten eines formbaren Druckmaterials, insbesondere FFF-3D-Drucker, umfassend:
- einen als Basis für den Aufbau des Objektes wirkenden Basiskörper,
- mindestens einen Druckkopf zum Auftragen des Druckmaterials,
- eine Bewegungsvorrichtung zur Änderung der relativen Lage des Druckkopfes gegenüber dem Basiskörper, und
- mindestens ein Druckmaterialreservoir zur Aufnahme des Druckmaterials und zur Ausgabe des Druckmaterials an den Druckkopf,
- wobei die Bewegungsvorrichtung mindestens ein sich entlang einer x-Achse erstreckendes, langgestrecktes erstes Trägerelement umfasst,
- wobei ein mit dem Druckkopf verbundener oder verbindbarer Antriebsschlitten entlang der x-Achse am ersten Trägerelement linear geführt und insbesondere parallelgeführt ist, dadurch gekennzeichnet,
- dass zwei Druckköpfe vorgesehen sind,
- dass der Antriebsschlitten eine Kupplungsvorrichtung aufweist,
- und dass der Antriebsschlitten über die Kupplungsvorrichtung mit den Druckköpfen koppelbar und von den Druckköpfen lösbar ist,
- wobei der Antriebsschlitten über die Kupplungsvorrichtung wahlweise mit einem Druckkopf, mit keinem der Druckköpfe, oder mit beiden Druckköpfen gekoppelt ist.

Gegebenenfalls ist vorgesehen, dass die durch die Kupplungsvorrichtung hergestellte Verbindung des Antriebsschlittens mit dem Druckkopf eine magnetische oder eine kraftschlüssige Verbindung ist, die insbesondere bei Überwinden der Haltekraft der Kupplungsvorrichtung durch Bewegen des Antriebsschlittens entlang der x-Achse trennbar ist.

Gegebenenfalls ist vorgesehen, dass die Kupplungsvorrichtung einen magnetischen oder magnetisierbaren Körper umfasst, der über magnetische Kräfte mit einem Element des Druckkopfs koppelbar oder gekoppelt ist.
Gegebenenfalls ist vorgesehen, dass die Druckköpfe jeweils über einen Druckkopfschlitten entlang der x-Achse am ersten Trägerelement linear geführt sind. Gegebenenfalls ist vorgesehen, dass der Antriebsschlitten entlang des Verlaufs des ersten Trägerelements zwischen den beiden Druckkopfschlitten der beiden Druckköpfe angeordnet ist.
Gegebenenfalls ist vorgesehen, dass das erste Trägerelement einen Schienenabschnitt aufweist, in dem die Druckköpfe entlang der x-Achse bewegbar und positionierbar sind, und dass in den beiden Endbereichen des Schienenabschnitts oder des ersten Trägerelements jeweils eine Haltevorrichtung zur temporären Fixierung jeweils eines Druckkopfs und insbesondere jeweils eine Parkposition vorgesehen ist. Gegebenenfalls ist vorgesehen, dass das erste Trägerelement einen Schienenabschnitt aufweist, in dem die Druckköpfe entlang der x-Achse bewegbar und positionierbar sind, und dass in den beiden Endbereichen des Schienenabschnitts oder des ersten Trägerelements jeweils eine Haltevorrichtung zur temporären Fixierung jeweils eines Druckkopfs vorgesehen ist, dass die Haltevorrichtungen jeweils ein Halteelement, wie insbesondere einen bewegbaren Riegel umfassen, und dass die Halteelemente der beiden Haltevorrichtungen gleichzeitig, synchronisiert oder mechanisch miteinander gekoppelt betätigbar sind
oder dass die Halteelemente der beiden Haltevorrichtungen unabhängig voneinander betätigbar sind

Gegebenenfalls ist vorgesehen, dass die Vorrichtung zur Bildung eines formstabilen, dreidimensionalen Objektes durch konsekutives oder kontinuierliches Aufschmelzen, gezieltes, mehrlagiges punktförmiges oder streifenförmiges Auftragen und Aushärten eines schmelzbaren, drahtförmigen oder filamentförmigen Druckmaterials eingerichtet ist.
Gegebenenfalls ist vorgesehen, dass ein Maschinengestell vorgesehen ist, das gegebenenfalls von einem Gehäuse umgeben oder gebildet ist, und dass durch das Maschinengestell oder durch das Gehäuse ein Bauraum zur Bildung des Objektes gebildet ist.

Gegebenenfalls ist vorgesehen, dass die Bewegungsvorrichtung mindestens ein sich entlang der x-Achse erstreckendes, langgestrecktes erstes Trägerelement umfasst,
- dass die Bewegungsvorrichtung mindestens ein sich entlang der y-Achse erstreckendes, langgestrecktes zweites Trägerelement umfasst,
- dass das erste Trägerelement entlang der y-Achse am zweiten Trägerelement linear geführt und insbesondere parallelgeführt ist,
- dass das zweite Trägerelement insbesondere ortsfest oder starr mit dem Maschinengestell verbunden ist,
- und dass ein mit dem Druckkopf verbundener oder verbindbarer Antriebsschlitten entlang der x-Achse am ersten Trägerelement linear geführt und insbesondere parallelgeführt ist, sodass eine x-y-Kinematik zur Bewegung des Druckkopfs in einer x-y-Ebene gebildet ist.

Gegebenenfalls ist vorgesehen, dass die Bewegungsvorrichtung einen mit dem Antriebsschlitten verbundenen ersten Antriebsriemen zur Bewegung des Druckkopfs, mindestens einen ersten Riemenantrieb mit einem Riemenantriebsrad zum Antrieb des Antriebsriemens und mehrere Umlenkrollen zur Umlenkung des Antriebsriemens umfasst,
- dass der erste Riemenantrieb insbesondere ortsfest am Maschinengestell angebracht ist,
- dass mindestens eine Umlenkrolle am ersten Trägerelement und mindestens eine Umlenkrolle am Maschinengestell angebracht ist,
- und dass der erste Antriebsriemen im Wesentlichen in einer ersten Antriebsebene verläuft, die parallel zur x-y-Ebene verläuft.
   Gegebenenfalls ist vorgesehen, dass die Bewegungsvorrichtung einen mit dem Antriebsschlitten verbundenen zweiten Antriebsriemen zur Bewegung des Druckkopfs, mindestens einen zweiten Riemenantrieb mit einem Riemenantriebsrad zum Antrieb des Antriebsriemens und mehrere Umlenkrollen zur Umlenkung des Antriebsriemens umfasst,
- dass der zweite Riemenantrieb insbesondere ortsfest am Maschinengestell angebracht ist,
- dass mindestens eine Umlenkrolle am ersten Trägerelement und mindestens eine Umlenkrolle am Maschinengestell angebracht ist,
- und dass der zweite Antriebsriemen im Wesentlichen entlang einer zweiten Antriebsebene verläuft, die parallel und beabstandet zur ersten Antriebsebene und/oder parallel zur x-y-Ebene verläuft.
   Gegebenenfalls ist vorgesehen, dass die Bewegungsvorrichtung pro Antriebsriemen zwei angetriebene Umlenkrollen zum Antrieb des Antriebsriemens umfasst
- oder dass die Bewegungsvorrichtung pro Antriebsriemen zwei Riemenantriebe zum Antrieb des Antriebsriemens umfasst,
- wobei die beiden angetriebenen Umlenkrollen oder die beiden Riemenantriebe eines Antriebsriemens im Verlauf des Antriebsriemens vor und nach der Verbindungsstelle oder nahe der Verbindungsstelle(n) mit dem Antriebsschlitten angeordnet sind, und dass die beiden Antriebe insbesondere synchronisiert sind.
   Gegebenenfalls ist vorgesehen, dass die Bewegungsvorrichtung pro Antriebsriemen zwei Riemenantriebe oder zwei angetriebene Umlenkrollen zum Antrieb des Antriebsriemens umfasst, wobei die beiden Riemenantriebe oder die beiden angetriebene Umlenkrollen eines Antriebsriemens im Verlauf des Antriebsriemens in jeweils einer Eckposition unmittelbar vor und nach der Verbindungsstelle mit dem Antriebsschlitten am Maschinengestell angebracht sind.

Gegebenenfalls ist vorgesehen, dass die Bewegungsvorrichtung eine Basisantriebsvorrichtung zur Bewegung und insbesondere zur Parallelbewegung des Basiskörpers entlang der z-Achse umfasst,
wobei die Basisantriebsvorrichtung einen Basisantrieb und mindestens ein Führungselement umfasst,
wobei der Basisantrieb als Linearantrieb und insbesondere als Schrittmotor mit einer Spindel und einer mit der Kugelumlaufspindel in Wirkkontakt stehenden Spindelmutter ausgebildet ist,
und wobei das Führungselement als Linearführung und insbesondere als entlang einer Schiene geführte Buchse ausgebildet ist.

Gegebenenfalls ist vorgesehen, dass die Bewegungsvorrichtung eine Basisantriebsvorrichtung zur Bewegung und insbesondere zur Parallelbewegung des Basiskörpers entlang der z-Achse umfasst,
wobei die Basisantriebsvorrichtung einen Basisantrieb und mindesten ein Führungselement umfasst,
wobei der Basisantrieb als Linearantrieb und insbesondere als Schrittmotor mit einer Kugelumlaufspindel und einer mit der Kugelumlaufspindel in Wirkkontakt stehenden Spindelmutter ausgebildet ist,
wobei das Führungselement als Linearführung und insbesondere als entlang einer Schiene geführte Buchse ausgebildet ist,
und dass eine als Kragträger ausgebildete Druckplattform zur Halterung des Basiskörpers vorgesehen ist, die im Wesentlichen normal zur Bewegungsrichtung des Basiskörpers, insbesondere in einer zur x-y-Ebene parallelen Ebene verläuft, und die über die Basisantriebsvorrichtung entlang der z-Achse verschiebbar und antreibbar ist. Gegebenenfalls ist vorgesehen, dass der Basiskörper als entfernbares Druckbett ausgebildet und lösbar mit der Druckplattform verbunden oder verbindbar ist, und dass die lösbare Verbindung insbesondere eine magnetische Verbindung ist. Gegebenenfalls ist vorgesehen, dass eine Heizvorrichung zur Beheizung des Basiskörpers vorgesehen ist.
Gegebenenfalls ist vorgesehen, dass der Druckkopf einen Druckkopfgrundkörper und eine an einer Verbindungsstelle mit dem Druckkopfgrundkörper verbundene Düsenanordnung zum Aufschmelzen und Aufragen des Druckmaterials umfasst, wobei die Düsenanordnung ausgehend von der Verbindungsstelle nacheinander einen Kühlkörper, eine Entkopplungsstelle und eine beheizte oder beheizbare Düse umfasst. Gegebenenfalls ist vorgesehen, dass der Druckkopf einen Druckkopfgrundkörper und eine an einer Verbindungsstelle mit dem Druckkopfgrundkörper verbundene Düsenanordnung zum Aufschmelzen und Aufragen des Druckmaterials umfasst, wobei die Düsenanordnung ausgehend von der Verbindungsstelle nacheinander einen Kühlkörper, eine Entkopplungsstelle und eine beheizte oder beheizbare Düse umfasst, und dass die Entkopplungsstelle ein Rohr zur Durchleitung des Druckmaterials umfasst, wobei das Rohr zumindest teilweise aus einem festen, wärmebeständigen Material mit geringer Wärmeleitfähigkeit gebildet ist, sodass durch das Rohr eine thermische Separierung zwischen der beheizten Düse und dem Kühlkörper gebildet ist.

Gegebenenfalls ist vorgesehen, dass der Druckkopf einen Druckkopfgrundkörper und eine an einer Verbindungsstelle mit dem Druckkopfgrundkörper verbundene Düsenanordnung zum Aufschmelzen und Aufragen des Druckmaterials umfasst, wobei die Düsenanordnung ausgehend von der Verbindungsstelle nacheinander einen Kühlkörper, eine Entkopplungsstelle und eine beheizte oder beheizbare Düse umfasst, und dass die Entkopplungsstelle ein Rohr zur Durchleitung des Druckmaterials umfasst, wobei das Rohr zumindest an der Innenseite gegenüber dem geschmolzenen Druckmaterial reibungsarm oder im Wesentlichen nicht haftend ausgebildet ist.

Gegebenenfalls ist vorgesehen, dass der Druckkopf einen Druckkopfgrundkörper und eine an einer Verbindungsstelle mit dem Druckkopfgrundkörper verbundene Düsenanordnung zum Aufschmelzen und Aufragen des Druckmaterials umfasst, wobei die Düsenanordnung ausgehend von der Verbindungsstelle nacheinander einen Kühlkörper, eine Entkopplungsstelle und eine beheizte oder beheizbare Düse umfasst, und dass die Entkopplungsstelle ein Rohr aus einer Metalllegierung, einer Titanlegierung oder aus einer Edelstahllegierung umfasst,
und/oder dass die Innenseite des Rohrs poliert, gehärtet, galvanisiert und/oder beschichtet ist, wobei die Innenseite insbesondere poliert und nitriert oder mit einer PTFE-Beschichtung versehen ist.

Gegebenenfalls ist vorgesehen, dass der Druckkopf einen Druckkopfgrundkörper und eine an einer Verbindungsstelle mit dem Druckkopfgrundkörper verbundene Düsenanordnung zum Aufschmelzen und Aufragen des Druckmaterials umfasst, wobei die Düsenanordnung ausgehend von der Verbindungsstelle nacheinander einen Kühlkörper, eine Entkopplungsstelle und eine beheizte oder beheizbare Düse umfasst, und dass die Düsenanordnung trennbar mit dem Druckkopfgrundkörper verbunden oder verbindbar ist.

Gegebenenfalls ist vorgesehen, dass das Druckmaterialreservoir als wechselbares Druckmaterialreservoir ausgestaltet ist, das modulartig mit dem Maschinengestell verbunden oder verbindbar ist, wobei die Verbindung insbesondere über eine Befestigungsvorrichtung und/oder einen Einschubschacht erfolgt. Gegebenenfalls ist vorgesehen, dass das Druckmaterialreservoir eine Klemmvorrichtung umfasst,
dass die Klemmvorrichtung eine Klemmstellung aufweist, in der ein Abschnitt des Druckmaterials zwischen einem federnd vorgespannten Federelement und einer Klemmbacke eingeklemmt ist,
und dass die Klemmvorrichtung eine Förderstellung aufweist, in der die Klemmung der Klemmvorrichtung so weit aufgehoben ist, sodass eine Förderung des Druckmaterials erfolgen kann.

Gegebenenfalls ist vorgesehen, dass das Druckmaterialreservoir eine Klemmvorrichtung umfasst,
dass die Klemmvorrichtung eine Klemmstellung aufweist, in der ein Abschnitt des Druckmaterials zwischen einem federnd vorgespannten Federelement und einer Klemmbacke eingeklemmt ist,
dass die Klemmvorrichtung eine Förderstellung aufweist, in der die Klemmung der Klemmvorrichtung so weit aufgehoben ist, sodass eine Förderung des Druckmaterials erfolgen kann,
und dass die Klemmvorrichtung selbsttätig von der Klemmstellung in die Förderstellung wechselt, wenn das Druckmaterialreservoir mit der Vorrichtung verbunden wird oder ist. Gegebenenfalls ist vorgesehen, dass ortsfest am Maschinengestell ein Druckmaterialantrieb mit einem Antriebsrad zur Förderung des Druckmaterials aus dem Druckmaterialreservoir zum Druckkopf vorgesehen ist,
und dass das Antriebsrad, wenn das Druckmaterialreservoir mit der Vorrichtung verbunden ist, mit einem Abschnitt des Druckmaterials in Wirkkontakt steht oder direkt an einem Abschnitt des Druckmaterials anliegt, sodass durch Betätigung des Antriebs eine Förderung des Druckmaterials bewirkt wird oder ist.
Gegebenenfalls ist vorgesehen, dass ortsfest am Maschinengestell ein Druckmaterialantrieb mit einem Antriebsrad zur Förderung des Druckmaterials aus dem Druckmaterialreservoir zum Druckkopf vorgesehen ist,
und dass das Antriebsrad, wenn das Druckmaterialreservoir mit der Vorrichtung verbunden ist, mit einem Abschnitt des Druckmaterials in Wirkkontakt steht oder direkt an einem Abschnitt des Druckmaterials anliegt, sodass durch Betätigung des Antriebs eine Förderung des Druckmaterials bewirkt wird oder ist,
und dass dabei der Abschnitt des Druckmaterials zwischen dem Antriebsrad und dem federnd vorgespannten Federelement eingeklemmt ist, sodass die Reibung zwischen Antriebsrad und Druckmaterial zur Verbesserung der Förderung erhöht ist. Gegebenenfalls ist vorgesehen, dass ortsfest am Maschinengestell ein Druckmaterialantrieb mit einem Antriebsrad zur Förderung des Druckmaterials aus dem Druckmaterialreservoir zum Druckkopf vorgesehen ist,
und dass das Antriebsrad, wenn das Druckmaterialreservoir mit der Vorrichtung verbunden ist, mit einem Abschnitt des Druckmaterials in Wirkkontakt steht oder direkt an einem Abschnitt des Druckmaterials anliegt, sodass durch Betätigung des Antriebs eine Förderung des Druckmaterials bewirkt wird oder ist,
und dass der Druckmaterialantrieb und das Antriebsrad im Maschinengestell verbleiben, wenn das Druckmaterialreservoir entnommen wird.
Gegebenenfalls ist vorgesehen, dass das Druckmaterialreservoir mit einer Befestigungsvorrichtung, die insbesondere als am Maschinengestell vorgesehener Einschubschacht ausgebildet ist, mit dem Maschinengestell verbindbar oder lösbar verbunden ist.
Gegebenenfalls ist vorgesehen, dass das Druckmaterialreservoir eine berührungslose Übertragungseinrichtung, insbesondere einen RFID-Chip umfasst, der in eingesetzter Stellung des Druckmaterialreservoirs von einer berührungslosen Übertragungseinrichtung, insbesondere einer RFID-Einheit auslesbar und/oder beschreibbar ist,
wobei eine berührungslose Übertragungseinrichtung, insbesondere die RFID-Einheit , mit der Datenverarbeitungseinrichtung verbunden ist, und wobei eine berührungslose Übertragungseinrichtung, insbesondere die RFID-Einheit, an der Befestigungsvorrichtung, am Einschubschacht oder am Maschinengestell angebracht ist.
Gegebenenfalls ist vorgesehen, dass das Druckmaterialreservoir eine berührungslose Übertragungseinrichtung, insbesondere einen RFID-Chip umfasst, der von einer berührungslosen Übertragungseinrichtung, insbesondere einer RFID-Einheit auslesbar und/oder beschreibbar ist,
und dass dabei Daten des Druckmaterialreservoirs wie Seriennummer, Materialtyp, Haltbarkeitsdatum, Sicherheitscode, verbleibende Materialmenge, die insbesondere nach jedem Gebrauch aktualisiert wird, und/oder materialabhängige Parameter wie die optimale Drucktemperatur oder die optimale Druckgeschwindigkeit übertragen werden. Gegebenenfalls ist vorgesehen, dass zwei Druckmaterialreservoirs vorgesehen sind, die jeweils über eine Druckmaterialleitung mit einem Druckkopf verbunden sind.

Gegebenenfalls betrifft die Erfindung ein Verfahren zur Bildung eines formstabilen, dreidimensionalen Objektes durch konsekutives oder kontinuierliches Auftragen und Aushärten eines formbaren Druckmaterials, insbesondere zur Bildung eines formstabilen, dreidimensionalen Objektes durch konsekutives oder kontinuierliches Auftragen und Aushärten zweier formbarer Druckmaterialien, und insbesondere Verfahren zum Druckkopfwechsel, umfassend folgende Schritte:
- Bewegen des Antriebsschlittens und des mit dem Antriebsschlitten über eine Kupplungsvorrichtung gekuppelten ersten Druckkopfs,
- Bewegen des Antriebsschlittens zu einem zweiten Druckkopf, der sich in einer im Endbereich des ersten Trägerelements angeordneten Parkposition befindet und dort von einer Haltevorrichtung temporär arretiert ist,
- Kuppeln des zweiten Druckkopfs mit dem Antriebsschlitten über die Kupplungsvorrichtung,
- Lösen der Haltevorrichtung des zweiten Druckkopfs, sodass der zweite Druckkopf aus seiner Parkposition bewegt werden kann,
- wobei vor der Kupplung des zweiten Druckkopfs mit dem Antriebsschlitten oder nach der der Kupplung des zweiten Druckkopfs mit dem Antriebsschlitten der Antriebsschlitten und der mit dem Antriebsschlitten über eine Kupplungsvorrichtung gekuppelte erste Druckkopf zur Parkposition des ersten Druckkopfs befördert wird, dort die Haltevorrichtung des ersten Druckkopfs geschlossen wird und der erste Druckkopfs vom Antriebsschlitten gelöst wird, sodass der erste Druckkopf in seiner Parkposition arretiert ist,
wobei nach dem Druckkopfwechsel lediglich der zweite Druckkopf mit dem Antriebschlitte verbunden ist.

Gegebenenfalls umfasst das Verfahren folgende Schritte:
- Bewegen des Antriebsschlittens und des mit dem Antriebsschlitten über eine Kupplungsvorrichtung gekuppelten ersten Druckkopfs zu einem zweiten Druckkopf, der sich in einer im Endbereich des ersten Trägerelements angeordneten Parkposition befindet und dort von einer Haltevorrichtung temporär arretiert ist,
- Kuppeln des zweiten Druckkopfs mit dem Antriebsschlitten über die Kupplungsvorrichtung, sodass der Antriebsschlitten mit beiden Druckköpfen verbunden ist,
- Lösen der Haltevorrichtung des zweiten Druckkopfs, sodass der zweite Druckkopf aus seiner Parkposition bewegt werden kann,
- Bewegen des Antriebsschlittens und der beiden mit dem Antriebsschlitten über die Kupplungsvorrichtung gekuppelten Druckköpfe zu der Parkposition des ersten Druckkopfs am gegenüberliegenden Endbereich des ersten Trägerelements,
- Schließen der Haltevorrichtung des ersten Druckkopfs und Lösen des ersten Druckkopfs vom Antriebsschlitten durch Lösen der Kupplungsvorrichtung, sodass der erste Druckkopf in seiner Parkposition arretiert ist,
- Bewegen des Antriebsschlittens und des mit dem Antriebsschlitten über die Kupplungsvorrichtung gekuppelten zweiten Druckkopfs.
Gegebenenfalls ist vorgesehen, dass die Haltevorrichtung des ersten Druckkopfs und die Haltevorrichtung des zweiten Druckkopfs gleichzeitig, synchronisiert oder miteinander gekoppelt gelöst oder geschlossen werden.
Gegebenenfalls ist vorgesehen, dass zum Arretieren eines Druckkopfs in der Parkposition der Druckkopf in den entsprechenden Endbereich des ersten Trägerelements verschoben wird, dann die entsprechende Haltevorrichtung geschlossen wird, und dann die Kupplungsvorrichtung durch Wegbewegen des Antriebsschlittens und durch Überwinden der Haltekraft getrennt wird. Gegebenenfalls betrifft die Erfindung ein Verfahren, insbesondere ein Verfahren zur Kalibrierung einer erfindungsgemäßen Vorrichtung, wobei die Vorrichtung zur Bildung eines formstabilen, dreidimensionalen Objektes eingerichtet ist, wobei das Objekt insbesondere durch konsekutives oder kontinuierliches Auftragen und Aushärten eines formbaren Druckmaterials gebildet wird, und wobei die Vorrichtung einen als Basis für den Aufbau des Objektes wirkenden Basiskörper, mindestens einen Druckkopf zum Auftragen des Druckmaterials, und eine Bewegungsvorrichtung zur Änderung der relativen Lage des Druckkopfes gegenüber dem Basiskörper aufweist,
umfassend folgende Schritte:
- Positionieren eines Druckkopfes entlang der x-y-Ebene an einem ersten Kalibrierpunkt,
- Verringern des Abstandes zwischen Basiskörper und Druckkopf, bis der Basiskörpers ein Kalibrierreferenzelement des Druckkopfs berührt,
- und Detektieren der Berührung zwischen dem Basiskörper und dem Kalibrierreferenzelement.
Gegebenenfalls ist vorgesehen, dass im Anschluss an die Detektion der Berührung zwischen dem Basiskörper und dem Kalibrierreferenzelement an dem ersten Kalibrierpunkt ein Abstand zwischen dem Basiskörper und dem Kalibrierreferenzelement hergestellt wird.
Gegebenenfalls ist vorgesehen, dass nach dem erneuten Herstellen eines Abstandes zwischen dem Basiskörper und dem Kalibrierreferenzelement der Druckkopf zu einem zweiten Kalibrierpunkt verfahren wird, wobei der zweite Kalibrierpunkt in der x-y-Ebene einen Abstand zum ersten Kalibrierpunkt aufweist,
dass anschließend der Abstand zwischen dem Basiskörper und dem Druckkopf verringert wird, bis der Basiskörper das Kalibrierreferenzelement des Druckkopfs berührt und eine Detektion der Berührung zwischen dem Basiskörper und dem Kalibrierreferenzelement erfolgt,
und dass im Anschluss an die Detektion der Berührung zwischen dem Basiskörper und dem Kalibrierreferenzelement an dem zweiten Kalibrierpunkt wiederum ein Abstand zwischen dem Basiskörper und dem Kalibrierreferenzelement hergestellt wird. Gegebenenfalls ist vorgesehen, dass nach dem erneuten Herstellen eines Abstandes zwischen dem Basiskörper und dem Kalibrierreferenzelement der Druckkopf zu einem weiteren, insbesondere dritten, Kalibrierpunkt verfahren wird, wobei der weitere Kalibrierpunkt in der x-y-Ebene einen Abstand zu den bereits angefahrenen Kalibrierpunkten aufweist,
dass anschließend der Abstand zwischen dem Basiskörper und dem Druckkopf verringert wird, bis der Basiskörpers das Kalibrierreferenzelement des Druckkopfs berührt und eine Detektion der Berührung zwischen dem Basiskörper und dem Kalibrierreferenzelement erfolgt,
und dass im Anschluss an die Detektion der Berührung zwischen dem Basiskörper und dem Kalibrierreferenzelement an dem weiteren Kalibrierpunkt ein Abstand zwischen dem Basiskörper und dem Kalibrierreferenzelement hergestellt wird.

Gegebenenfalls ist vorgesehen, dass nacheinander mindestens drei Kalibrierpunkte angefahren werden, bis jeweils eine Berührung zwischen Basiskörper und dem Kalibrierreferenzelement detektiert wird, und dass relative oder absolute Lagedaten, insbesondere x-, y-, und z-Werte der Berührpunkte oder der Höhendifferenzen der Berührpunkte entlang der z-Achse an eine Datenverarbeitungseinrichtung übermittelt werden.
Gegebenenfalls ist vorgesehen, dass nacheinander mehrere flächig, rasterförmig oder schachbrettartig entlang des Basiskörpers angeordnete Kalibrierpunkte angefahren werden, bis jeweils eine Berührung zwischen Basiskörper und dem Kalibrierreferenzelement detektiert wird, und dass relative oder absolute Lagedaten, insbesondere x-, y-, und z-Werte der Berührpunkte oder der Höhendifferenzen der Berührpunkte entlang der z-Achse an eine Datenverarbeitungseinrichtung übermittelt werden.
Gegebenenfalls ist vorgesehen, dass die x-, y-, und z-Werte der Berührpunkte oder die Höhendifferenzen der Berührpunkte entlang der z-Achse an eine Datenverarbeitungseinrichtung übermittelt werden, und dass die Datenverarbeitungseinrichtung eine Kalibriermatrix oder eine Kalibrierfläche ermittelt, die im Wesentlichen einer mathematischen Abbildung oder einer angenäherten mathematischen Abbildung der Oberfläche des Basiskörpers entspricht.

Gegebenenfalls ist vorgesehen, dass jeder Kalibrierpunkt öfters, insbesondere drei Mal, angefahren wird, dass die dabei aufgenommenen Lagedaten eines Kalibrierpunkts miteinander verglichen werden,
und dass der Kalibrierpunkt mindestens ein weiteres Mal angefahren wird, wenn die aufgenommenen Lagedaten, insbesondere die z-Werte der Lagedaten, um einen Wert voneinander abweichen, der einen vorbestimmten Maximalabweichungswert überschreitet.
Gegebenenfalls ist vorgesehen, dass zwei Druckköpfe vorgesehen sind,
dass nach dem Anfahren der Kalibrierpunkte mit dem ersten Druckkopf ein Druckkopfwechsel durchgeführt wird, sodass ausschließlich der zweite Druckkopf mit dem Antriebsschlitten gekoppelt ist,
dass anschließend ein beliebiger, bereits mit dem ersten Druckkopf angefahrener Kalibrierpunkt, insbesondere ein einziger beliebiger bereits mit dem ersten Druckkopf angefahrener Kalibrierpunkt, auch mit dem zweiten Druckkopf angefahren wird,
und dass aus den aufgenommenen Lagedaten des zweiten Druckkopfs ein z-Differenzwert zum entsprechenden Wert des ersten Druckkopfs errechnet wird. Gegebenenfalls ist vorgesehen, dass die Kalibrierfläche oder die Kalibriermatrix des zweiten Druckkopfs durch mathematische Verschiebung der Kalibriermatrix des ersten Druckkopf um den z-Differenzwert errechnet wird, wobei die Verschiebung der Kalibriermatrix insbesondere durch Vektoraddition errechnet wird.
Gegebenenfalls ist vorgesehen, dass zur Bildung eines dreidimensionalen Objektes der Druckkopf bei einer Bewegung in der x-y-Ebene entlang der Kalibrierfläche oder parallel zur Kalibrierfläche verfahren wird, um, insbesondere beim Druckvorgang, den Abstand zwischen dem Basiskörper und der Düsenspitze konstant zu halten.
Gegebenenfalls ist vorgesehen, dass bei der Bildung eines Objektes die z-Position des Basiskörpers in Abhängigkeit der x-y-Position des Druckkopfes dynamisch angepasst wird,
sodass die Düse des Druckkopfs in jeder Druckstellung den gleichen Abstand zur Druckoberfläche bzw. zum Druckobjekt aufweist oder die Differenz schrittwese ausgeglichen wird.
Gegebenenfalls ist vorgesehen, dass eine Schrägstellung des Druckobjektes infolge eines schräg stehenden Basiskörpers bei dem Druckvorgang durch eine horizontale Verschiebung der einzelnen Schichten kompensiert wird.
Gegebenenfalls ist vorgesehen, dass die Kalibrierung automatisch oder automatisiert erfolgt, wobei die Automatisierung insbesondere programmgesteuert durch eine Datenverarbeitungseinrichtung durchgeführt wird.
Gegebenenfalls ist vorgesehen, dass das Kalibrierreferenzelement die Spitze der Düse des Druckkopfs, ein an der Spitze der Düse vorgesehenes Element oder ein die Spitze der Düse bildendes Element ist.
Gegebenenfalls ist vorgesehen, dass zur Relativbewegung zwischen dem Basiskörper und dem Druckkopf die Basis entlang der z-Achse bewegt wird, wobei die Bewegung durch Betätigen der Basisantriebsvorrichtung geschieht.
Gegebenenfalls betrifft die Erfindung ein Verfahren zur Bildung eines formstabilen, dreidimensionalen Objektes durch konsekutives oder kontinuierliches Auftragen und Aushärten eines formbaren Druckmaterials, insbesondere ein Verfahren zur Überwachung der Druckmaterialförderung, umfassend folgende Schritte:
- Betätigen eines Antriebsrades eines Druckmaterialantriebs zur Förderung des Druckmaterials,
- Messung der rückwirkenden Motorspannung des Druckmaterialantriebs,
- Vergleichen der rückwirkenden Motorspannung mit einem Sollwert oder einem Sollbereich, insbesondere Vergleichen einer gleitenden Standardabweichung der rückwirkenden Motorspannung mit einem Sollwert oder einem Sollbereich,
- Einleiten eines alternativen Betriebsmodus oder eines Reinigungsmodus, wenn der Wert oder die gleitende Standardabweichung der rückwirkenden Motorspannung vom Sollwert oder von dem Sollbereich abweicht.

Dabei kann es von Vorteil sein, wenn bei der Kalibrierung der Vorrichtung mithilfe eines Druckkopfs ein weiterer Druckkopf in seiner Parkposition angeordnet ist, wobei sich die Parkposition bevorzugt außerhalb des Druckbereichs befindet.

Gegebenenfalls ist vorgesehen, dass ein ortsfest angeordnetes oder anordenbares Maschinengestell und/oder Gehäuse vorgesehen ist. Bevorzugt ist vorgesehen, dass eine Bewegungsvorrichtung vorgesehen ist, die eine Relativbewegung eines Druckkopfs gegenüber einer Basis entlang mehrerer Freiheitsgrade erlaubt, sodass ein dreidimensionales Objekt aufgebaut werden kann. Bevorzugt sind die Freiheitsgrade drei Linearfreiheitsgrade, insbesondere Freiheitsgrade entlang einem kartesischen Koordinatensystem mit einer x-, y- und einer z-Achse. Definitionsgemäß kann die x-y-Ebene in allen Ausführungsformen im Wesentlichen waagrecht verlaufen. Definitionsgemäß kann die z-Achse in allen Ausführungsformen ein Normalvektor der x-y-Ebene sein.

Zur Bewegung des Druckkopfs entlang der x-Achse ist bevorzugt ein langgestrecktes erstes Trägerelement vorgesehen, das sich profilförmig entlang der x-Achse erstreckt. Der Druckkopf ist bevorzugt durch Verlagerung eines entlang der Längserstreckungsrichtung eines ersten Trägerelements geführten Antriebsschlittens verfahrbar. Gegebenenfalls ist vorgesehen, dass der Antriebsschlitten und/oder das erste Trägerelement Führungsnuten und/oder Führungsfortsätze umfassen, sodass eine schienenartige Führung, insbesondere eine schienenartige Führung mit einer Hinterschneidung und lediglich einem Linearfreiheitsgrad, gebildet ist.

Gegebenenfalls ist vorgesehen, dass das erste Trägerelement entlang der y-Achse geführt ist. Gegebenenfalls ist dazu ein zweites Trägerelement vorgesehen, das sich schienenartig oder profilförmig entlang der oder parallel zur y-Achse erstreckt. Gegebenenfalls sind zwei zweite Trägerelemente vorgesehen, die das erste Trägerelement an dessen Endabschnitten oder im Bereich dieser Endabschnitte führen. Bevorzugt ist das zweite Trägerelement jeweils im Wesentlichen starr oder ortsfest mit dem Maschinengestell verbunden. Bevorzugt ist vorgesehen, dass das zweite Trägerelement im Wesentlichen normal zum ersten Trägerelement verläuft, sodass insbesondere eine x-y-Kinematik gebildet ist.

Zum Antrieb der Bewegung des Druckkopfs ist gegebenenfalls mindestens ein Antriebsriemen vorgesehen, wobei bevorzugt zwei Antriebsriemen vorgesehen sind. Besonders bevorzugt sind zum Antrieb des Druckkopfs oder des Antriebsschlittens entlang der x-y-Ebene weniger als drei Antriebsriemen vorgesehen. Gegebenenfalls ist vorgesehen, dass der oder die Antriebsriemen als umlaufende, gegebenenfalls geschlossene Antriebsriemen ausgebildet ist oder sind, wobei der oder die Antriebsriemen gegebenenfalls zwei miteinander verbundene Enden aufweist oder aufweisen. Beispielsweise sind die beiden Enden mit einem Antriebsschlitten verbunden. Gegebenenfalls ist ein Antriebsriemen oder sind beide Antriebsriemen in allen Ausführungsformen als Zahnriemen ausgebildet.

Der erste Antriebsriemen ist bevorzugt mit dem Antriebsschlitten verbunden oder gekoppelt und verläuft insbesondere:
vom Antriebsschlitten entlang der Längserstreckungsrichtung des ersten Trägerelements zu einer am Endbereich des ersten Trägerelements angeordneten Umlenkrolle; von dieser Umlenkrolle weiter zu einer Umlenkrolle, die in einem Endbereich eines zweiten Trägerelements am Maschinengestell vorgesehen ist; von dort aus weiter bis zu einer Umlenkrolle, die in einem Endbereich des anderen zweiten Trägerelements vorgesehen ist; von dort entlang dieses zweiten Trägerelements an dem ersten Trägerelement vorbei zu einer weiteren Umlenkrolle, an der der Riemen im Wesentlichen 180° umgelenkt wird; von dort aus entlang des zweiten Trägerelements zu einer Umlenkrolle, die am nähergelegenen Endbereich des ersten Trägerelements vorgesehen ist; und von dort aus wiederum zum Antriebsschlitten, sodass ein geschlossener, umlaufender Antriebsriemen gebildet ist. Die Drehachsen der Umlenkrollen verlaufen im Wesentlichen parallel zueinander. Zumindest eine der Umlenkrollen ist insbesondere als Riemenantriebsrad eines Riemenantriebs ausgebildet. Bevorzugt ist vorgesehen, dass eine am Maschinengestell angebrachte Umlenkrolle als Riemenantriebsrolle ausgebildet ist. Bevorzugt ist vorgesehen, dass die entlang des Antriebsriemens am nächsten zum Antriebsschlitten am Maschinengestell angeordneten Umlenkrollen als Riemenantriebsräder ausgebildet sind. Gegebenenfalls sind demnach zwei Umlenkrollen als Riemenantriebsrolle jeweils eines Riemenantriebs ausgebildet. Die Antriebe sind bevorzugt ortsfest am Maschinengestell angebracht.

Bevorzugt ist vorgesehen, dass der erste Antriebsriemen im Wesentlichen entlang einer zur x-y-Ebene parallelen Ebene verläuft.

Bevorzugt ist ein zweiter Antriebsriemen vorgesehen. Bevorzugt sind die Konfiguration des zweiten Antriebsriemens und dessen Antriebe und/oder Umlenkrollen gleich ausgebildet wie die Konfiguration des ersten Antriebsriemens, wobei die Konfiguration eine gegenüber dem ersten Antriebsriemen gespiegelte Konfiguration ist. Insbesondere ist die Konfiguration des zweiten Antriebsriemens gegenüber der Konfiguration des ersten Antriebsriemens um eine Ebene gespiegelt, in der die z-Achse liegt. Insbesondere ist die Spiegelebene eine mittig verlaufende y-z-Ebene. Bevorzugt verläuft der zweite Antriebsriemen in einer zur Ebene des ersten Antriebsriemens um einen bestimmten Abstand entlang der z-Achse versetzten parallelen Ebene.

Bevorzugt ist vorgesehen, dass durch Betätigung des Riemenantriebs des ersten Antriebsriemens und Betätigung des Riemenantriebs des zweiten Antriebsriemen der Antriebsschlitten in eine beliebige Stellung entlang der x-Achse und/oder entlang des ersten Trägerelements verfahren werden kann. Darüber hinaus kann durch Betätigung der beiden Riemenantriebe das erste Trägerelement entlang des zweiten Trägerelements verschoben werden, wodurch der Antriebsschlitten und gegebenenfalls der Druckkopf entlang einer im Rahmen der Kinematik beliebigen Kontur in der x-y-Ebene zu einer beliebigen Position verfahren werden kann. Vorteilhaft an dieser Konfiguration ist, dass die Antriebe zur Bewegung des Druckkopfs ortsfest am Maschinengestell angeordnet sein können, und lediglich vergleichsweise leichte Komponenten, wie beispielsweise eine Umlenkrolle oder ein Riemen als bewegte Massen vorliegen.

Gegebenenfalls sind zwei Druckköpfe vorgesehen, wobei die beiden Druckköpfe bevorzugt am ersten Trägerelement entlang der x-Achse verschiebbar angeordnet sind. Gegebenenfalls ist vorgesehen, dass ein entlang des ersten Trägerelements verschiebbarer und antreibbarer Antriebsschlitten eine Kupplungsvorrichtung aufweist, wobei die Kupplungsvorrichtung bevorzugt mit einem der Druckköpfe oder mit beiden Druckköpfen koppelbar und/oder von den Druckköpfen lösbar ist. Gegebenenfalls sind die Druckköpfe selbst jeweils an einem eigenen Druckkopfschlitten entlang der x-Achse am ersten Trägerelement linear geführt. Gegebenenfalls geschieht die Führung eines oder beider Druckköpfe über den Antriebsschlitten. In diesem Fall können die Druckköpfe entfernt von dem ersten Trägerelement angeordnet sein, wobei die Kupplung und Führung am ersten Trägerelement ausschließlich über den Antriebsschlitten erfolgt.

Gegebenenfalls umfasst die Kupplungsvorrichtung einen magnetischen und/oder magnetisierbaren Körper. Insbesondere kann der Druckkopf über magnetische Kräfte am Antriebsschlitten temporär befestigt werden. Optional können beide Druckköpfe über jeweils mindestens einen Magneten oder magnetisierbaren Körper mit dem Antriebsschlitten bzw. der Kupplungsvorrichtung gekoppelt werden.

Gegebenenfalls ist vorgesehen, dass in den beiden Endbereichen des ersten Trägerelements jeweils eine Parkposition für einen Druckkopf eingerichtet ist. Die Parkpositionen umfassen bevorzugt jeweils eine Haltevorrichtung zur temporären Fixierung des jeweiligen Druckkopfs. Insbesondere umfasst die Haltevorrichtung ein Halteelement, wie beispielsweise einen bewegbaren Riegel, einen ausfahrbaren Bolzen, ein magnetisches Element oder Ähnliches, durch welches der Druckkopf in der Parkposition arretiert oder festgehalten werden kann. Gegebenenfalls ist vorgesehen, dass die Haltekraft der Haltevorrichtung größer ist, als die Haltekraft der Kupplungsvorrichtung, womit sich die Kupplungsvorrichtung und damit der Druckkopf vom Antriebsschlitten trennt, wenn der Antriebsschlitten bei geschlossener Haltevorrichtung von der Parkposition wegbewegt wird. Insbesondere kann die Kupplungsvorrichtung eine kraftschlüssige Klemmverbindung oder eine magnetische Verbindung sein oder umfassen, wobei gegebenenfalls die Haltevorrichtung eine formschlüssige Verbindung herstellen kann.

Zum Beispiel könnte für das Abdocken eine Vorrichtung an der Rückwand des Druckbereichs verwendet werden, die bei einem Druckkopfwechsel angefahren wird, die Magneten zwischen Druckkopf vom Antriebsschlitten voneinander trennt und den Druckkopf in Richtung eines etwas schwächeren Magneten drückt, der diesen in seiner Parkposition fixiert. Beim erneuten Andocken verbinden sich die beiden stärkeren Magneten zwischen Druckkopf und Antriebsschlitten und die beiden schwächeren Magneten zwischen Druckkopf und Parkposition werden auseinander gezogen sobald sich der Antriebsschlitten wieder in Richtung des Druckbereichs bewegt.

Das in der Beschreibung als Befestigungsvorrichtung oder Verriegelungseinheit bezeichnete Bauteil erfüllt gegebenenfalls zwei Aufgaben, die nicht zwangsläufig vom selben Bauteil erfüllt werden müssen, nämlich
- Arretieren der Materialkassette in der richtigen Position, um das Druckmaterial aus der Klemmstellung zu lösen und den richtigen Gegendruck für den Materialvorschub zu erzeugen
- Verriegeln der Materialkassette im Einschubschacht bis sie zurückgespult und freigegeben wurde, um zu verhindern, dass bei einer vorzeitigen Entnahme ein Teil des Druckmaterials abbricht und im Drucker verbleibt. Gegebenenfalls befindet sich an der Vorderseite der Materialkassette ein gefederter Riegel, der einschnappt, wenn die Materialkassette eingelegt wird, und hinunter gedrückt werden muss, wenn die Materialkassette wieder entnommen werden soll. Um eine vorzeitige Entnahme zu verhindern, kann eine Verriegelungseinheit verwendet werden, die in diesem Fall jedoch nicht die Aufgabe hat, die Gegenkraft für die Klemmstellung und den Materialvorschub aufzubringen, so dass aufgrund der beim Öffnen der Verriegelung auftretenden geringeren Reibung ein deutlich schwächerer Zugmagnet verwendet werden kann.

Gegebenenfalls ist vorgesehen, dass die beiden Haltevorrichtungen gleichzeitig, synchronisiert oder gekoppelt geöffnet oder geschlossen werden können.

Zum Druckkopfwechsel kann insbesondere wie folgt vorgegangen werden:
Ein erster Druckkopf ist über die Kupplungsvorrichtung mit dem Antriebsschlitten verbunden. In weiterer Folge fährt der Antriebsschlitten gemeinsam mit dem ersten Druckkopf zur Parkposition des zweiten Druckkopfs, wo der zweite Druckkopf von der Haltevorrichtung gehalten und/oder arretiert ist. In weiterer Folge kommt es zu einer Kopplung des zweiten Druckkopfs mit dem Antriebsschlitten über die Kupplungsvorrichtung. Anschließend wird die Haltevorrichtung des zweiten Druckkopfs geöffnet. Gegebenenfalls werden dabei beide Haltevorrichtungen beider Parkpositionen geöffnet. In weiterer Folge bewegt sich der Antriebsschlitten, der mit beiden Druckköpfen gekoppelt ist, Richtung Parkposition des ersten Druckkopfs. Befindet sich der erste Druckkopf in seiner Parkposition, so wird die Haltevorrichtung des ersten Druckkopfs geschlossen, womit der erste Druckkopf in seiner Parkposition arretiert wird. Gegebenenfalls wird dabei auch die Haltevorrichtung des zweiten Druckkopfs geschlossen. Da sich der zweite Druckkopf in der vorliegenden Stellung jedoch nicht in seiner Parkposition befindet, wird der zweite Druckkopf nicht arretiert. In weiterer Folge wird die Kupplungsvorrichtung zwischen Antriebsschlitten und erstem Druckkopf getrennt, und der Antriebsschlitten ist nur noch mit dem zweiten Druckkopf gekoppelt. Zum erneuten Druckkopfwechsel wird dieser Vorgang logisch angepasst für den anderen Druckkopf wiederholt.
Gegebenenfalls ist vorgesehen, dass der Antriebsschlitten entlang der x-Ache beidseitig mit je einem Druckkopf koppelbar ist. Durch die Wechselbarkeit kann in vorteilhafter Weise beim Druckvorgang wahlweise mit dem ersten Druckkopf oder mit dem zweiten Druckkopf ein Objekt aufgebaut werden, ohne dass dadurch beim Druckvorgang die bewegte Masse erhöht wird.

Gegebenenfalls kann in allen Ausführungsformen eine Parkposition starr oder ortsfest am Maschinengestell vorgesehen sein. Gegebenenfalls können zwei Druckköpfe mit je einer Parkposition vorgesehen sein, wobei bevorzugt beide Parkpositionen starr oder ortsfest am Maschinengestell vorgesehen sind. die Parkposition kann beispielsweise im Bereich der Rückwand des Gehäuses angeordnet sein.

Gegebenenfalls kann in allen Ausführungsformen eine Parkposition an einem Trägerelement, bevorzugt am ersten Trägerelement und besonders bevorzugt in einem Endbereich des ersten Trägerelements vorgesehen sein. Gegebenenfalls können zwei Druckköpfe mit je einer Parkposition vorgesehen sein, wobei bevorzugt beide Parkpositionen an einem Trägerelement, bevorzugt am ersten Trägerelement und besonders bevorzugt in jeweils einem Endbereich des ersten Trägerelements vorgesehen sind.

Zum Aufbau dreidimensionaler Objekte wird ein Druckmaterial konsekutiv oder kontinuierlich aufgetragen und ausgehärtet, wobei neben der Verschiebbarkeit des Druckkopfs in der x-y-Ebene auch eine Relativbewegung entlang der z-Achse erfolgt, um insbesondere einen Aufbau des Objektes entlang der z-Achse zu ermöglichen.

Gegebenenfalls ist vorgesehen, dass die Bewegungsvorrichtung eine Basisantriebsvorrichtung zur Bewegung und insbesondere zur Parallelbewegung der Basis entlang der z-Achse umfasst.

Die Basis umfasst bevorzugt eine gerade, ebene Fläche, die im Wesentlichen parallel zur x-y-Ebene verläuft, und auf der das Objekt aufgebaut werden kann. Gegebenenfalls weist die Basis jedoch eine gewisse Struktur oder eine gekrümmte oder komplexe Oberfläche auf. Die Basisantriebsvorrichtung umfasst beispielsweise Führungselemente, die zur Parallelverschiebung der Basis eingerichtet sind. Bevorzugt umfasst die Basisantriebsvorrichtung einen Antrieb, insbesondere einen Linearantrieb, durch den die Basis entlang der z-Achse bewegt werden kann.

Gemäß einer bevorzugten Ausführungsform wird der zu bildende dreidimensionale Körper schichtförmig aufgebaut. Die erste Schicht folgt im Wesentlichen der Oberfläche des Basiskörpers und insbesondere jener Oberfläche des Basiskörpers, die Richtung Druckkopf weist. Da die Oberfläche des Basiskörpers gegebenenfalls gekrümmt oder aufgrund von Toleranzen nicht exakt parallel zur x-y-Ebene verläuft, besteht die Gefahr, dass bei einer Verschiebung des Druckkopfs entlang der x-y-Richtung der Abstand zwischen der Düsenspitze und dem Basiskörper variiert und insbesondere zu groß oder zu klein ist, wodurch die Genauigkeit bei der Bildung des Objekts beeinträchtigt ist. Aus diesem Grund wird bevorzugt eine Kalibrierung durchgeführt.

Gegebenenfalls ist in allen Ausführungsformen vorgesehen, dass diese Kalibrierung automatisch bzw. automatisiert erfolgt. Die Automatisierung kann beispielsweise programmgesteuert, insbesondere durch eine Datenverarbeitungseinrichtung programmgesteuert durchgeführt werden. Gegebenenfalls ist vorgesehen, dass der Druckkopf mit einem Kalibrierreferenzelement versehen ist. Dieses Kalibrierreferenzelement ermöglicht die exakte Bestimmung der Oberfläche des Basiskörpers gegenüber der Düsenspitze. Bevorzugt ist das Kalibrierreferenzelement die Spitze der Düse des Druckkopfs, ein an der Spitze der Düse vorgesehenes Element oder ein die Spitze der Düse bildendes Element. Durch die Verwendung der Düsenspitze als Kalibrierreferenzelement ist eine exakte Kalibrierung der Position gegenüber dem Basiskörper möglich.

Zur Kalibrierung werden nun bevorzugt mehrere Kalibrierpunkte entlang der x-y-Ebene angefahren, wobei die einzelnen Kalibrierpunkte voneinander beabstandet sind und bevorzugt flächig und/oder rasterförmig entlang des Verlaufs des Basiskörpers verteilt sind. Jeder der Kalibrierpunkte wird zur Kalibrierung einzeln angefahren. Dies bedeutet, dass in einem ersten Schritt der Druckkopf entfernt von dem Basiskörper an die gewünschte x-y-Position des Kalibrierpunktes verfahren wird. In einem nächsten Schritt wird der Abstand zwischen dem Druckkopf bzw. dem Kalibrierreferenzelement und dem Basiskörper so lange verringert, bis es zu einer Berührung dieser Komponenten kommt. Diese Berührung wird beispielsweise durch einen Beschleunigungssensor und/oder durch Detektion einer erhöhten Motorlast des Basiskörperantriebs detektiert. In weiterer Folge wird die Bewegung gestoppt, und der Basiskörper wieder in einen gewissen Abstand zum Kalibrierreferenzelement gebracht. In weiterer Folge werden der Druckkopf und dadurch auch das Kalibrierreferenzelement zu einer zweiten Kalibrierposition gebracht, wo die vorangegangenen Schritte wiederholt werden. Diese Schritte können an mehreren, bevorzugt an mehr als zwei und insbesondere an mehreren rasterförmig entlang dem Basiskörper verteilten Kalibrierpunkten durchgeführt werden. Bei jedem Kalibrierpunkt werden einerseits die x-y-Lagedaten sowie Lagedaten, die Rückschlüsse auf die Höhendifferenzen der Berührpunkte entlang der z-Achse ermöglichen, an einer Datenverarbeitungseinrichtung übermittelt. In dieser Datenverarbeitungseinrichtung kann dann über die einzelnen Koordinaten und deren z-Lagen eine Kalibriermatrix oder eine Kalibrierfläche errechnet werden, die im Wesentlichen einer mathematischen Abbildung der Fläche des Basiskörpers entspricht.

Gegebenenfalls sind zwei oder mehr Druckköpfe an der Vorrichtung vorgesehen. Um auch eine Kalibrierung bezogen auf den zweiten oder weiteren Druckkopf durchzuführen, wird ein Druckkopfwechsel durchgeführt, sodass ausschließlich der zweite Druckkopf mit dem Antriebsschlitten gekoppelt ist. In weiterer Folge wird ein beliebiger bereits mit dem ersten Druckkopf angefahrener Kalibrierpunkt auch von dem zweiten Druckkopf angefahren. Aus den dabei enthaltenen Daten kann eine z-Differenz der Kalibrierung zwischen dem ersten und dem zweiten Druckkopf errechnet werden. Beispielsweise ist die Düse des zweiten Druckkopfs geringfügig kürzer als die Düse des ersten Druckkopfs, womit es zu einer Differenz des Abstandes zwischen Düsenspitze und Basiskörper käme. Durch das Auslesen dieser z-Differenz kann durch einen einzigen Kalibrierpunkt die gesamte Kalibriermatrix auch für den zweiten Druckkopf, beispielsweise durch vektorielles addieren der z-Differenz, errechnet werden. Gegebenenfalls wird jedoch ein weiterer Kalibrierpunkt auch vom zweiten oder weiteren Druckkopf angefahren, um gegebenenfalls die Verschiebung der Kalibrierfläche zu verifizieren.

Zur Bildung eines dreidimensionalen Objektes kann nun der Druckkopf entlang der x-y-Ebene entlang der gewünschten Kontur verfahren werden. Um den Abstand zwischen dem Basiskörper und der Düsenspitze konstant zu halten, kann über den Basiskörperantrieb und die hinterlegte mathematische Abbildung der Kalibrierfläche ein konstanter Abstand bei einer x-y-Bewegung des Druckkopfs beibehalten werden. Die nachfolgenden Schichten können ebenfalls entlang der Kalibrierfläche, bzw. entlang einer zur Kalibrierfläche um die Schichtdicke versetzten Fläche aufgetragen werden.

Gegebenenfalls kann bei einer Schrägstellung der Oberfläche des Basiskörpers das gesamte Objekt entlang des Normalvektors dieser schräggestellten Fläche aufgebaut werden. dieser Normalvektor weicht dann in der Regel von der Richtung der z-Achse ab.

Gegebenenfalls können eine Unebenheit und/oder eine Schrägstellung der Oberfläche des Basiskörpers auch durch Auftragen eines Druckmaterials oder einer Stützstruktur ausgeglichen bzw. nivelliert werden. Diese Nivellierung kann beispielsweise durch die ersten Druckschichten aufgebaut werden. Die Nivellierung kann insbesondere ein Teil des Druckvorgangs sein. In diesem Fall kann das Objekt selbst bei einer Schrägstellung der Oberfläche des Basiskörpers entlang der z-Achse aufgebaut werden.

Die Erfindung betrifft gegebenenfalls einen Druckkopf zur Bildung eines formstabilen, dreidimensionalen Objektes durch konsekutives oder kontinuierliches Auftragen und Aushärten eines formbaren Druckmaterials. Insbesondere wird ein draht- oder filamentförmiges Druckmaterial dem Druckkopf zugeführt. Gegebenenfalls umfasst der Druckkopf einen Druckkopfgrundkörper und eine Düsenanordnung. Gegebenenfalls ist vorgesehen, dass am Druckkopfgrundkörper ein Antrieb mit einem Antriebsrad zur Förderung des Druckmaterials vorgesehen ist. Das Druckmaterial wird bevorzugt über eine rohrförmige Verbindungsleitung von dem Druckmaterial in den Druckkopf geleitet. Gegebenenfalls ist vorgesehen, dass der Druckkopf mindestens einen Lüfter umfasst. Der Lüfter ist bevorzugt mit einem oder mehreren Lüftungskanälen verbunden oder strömungsverbunden. Die Ausgänge des Lüftungskanals sind bevorzugt auf die Druckstelle gerichtet, sodass das in geschmolzenem Zustand aufgetragene Druckmaterial durch die Luftkühlung gekühlt und dadurch ausgehärtet wird. Gegebenenfalls ist ein Lüfter vorgesehen, der Teile einer Düsenanordnung, insbesondere einen Kühlkörper der Düsenanordnung durch künstliche Konvektion kühlt oder dessen Wärme abführt. Gegebenenfalls ist der Lüfter zur Kühlung der Düsenanordnung und der Lüfter zur Kühlung des aufgetragenen Druckmaterials derselbe Lüfter.

Gegebenenfalls ist vorgesehen, dass ausgehend von einer Verbindungsstelle der Düsenanordnung mit dem Druckkopfgrundkörper nacheinander ein Kühlkörper, eine Entkopplungsstelle und eine beheizte oder beheizbare Düse vorgesehen sind. Diese drei Elemente ragen gegebenenfalls frei von der Verbindungsstelle mit dem Druckkopfgrundkörper ab. Insbesondere ist es vorteilhaft, wenn die heiße Düse von den restlichen Komponenten des Druckkopfs weitestgehend thermisch gedämmt oder isoliert angeordnet ist. Dazu kann zwischen dem Kühlkörper und der Düse eine thermische Entkopplungsstelle vorgesehen sein. Diese thermische Entkopplungsstelle kann beispielsweise durch einen Körper gebildet sein, der einen geringen Wärmeleitkoeffizienten aufweist, wodurch eine Isolierung oder Dämmung gegeben ist. Insbesondere soll die Wärmeleitung zwischen der heißen Düse und dem Kühlkörper verringert oder minimiert werden. Gleichzeitig soll gegebenenfalls die Übergangszone, in der das Druckmaterial vom festen in einen formbaren, geschmolzenen Zustand wechselt, so kurz wie möglich gehalten werden. Aus diesem Grund ist es vorteilhaft, eine ausreichende thermische Entkoppelung vorzusehen. Der Kühlkörper ist insbesondere dazu eingerichtet, die von der beheizten Düse kommende Wärme an die Umgebung abzugeben, sodass die Verbindungsstelle und der Druckkopfgrundköper und weitere Komponenten des Druckkopfs weitestgehend thermisch unbelastet bleiben und das Druckmaterial im oberen Bereich nicht erwärmt wird.

Gegebenenfalls ist gemäß einer nicht dargestellten Ausführungsform die Schmelzeinheit bzw. eine Düsenanordnung wie folgt ausgebildet: Die Schmelzeinheit umfasst beispielsweise einen Kühlkörper aus Aluminium, ein Verbindungsstück aus Edelstahl, einen ringförmigen Heizkörper sowie eine Düseneinheit, die eine Düse, zwei Hülsen, beispielsweise zwei Messinghülsen und ein Rohr, beispielsweise einen Teflonschlauch oder ein Metallrohr umfasst. Über das Rohr gelangt das Druckmaterial durch den Kühlkörper in die Düse, wo es verflüssigt und durch das nachkommende Druckmaterial nach unten heraus gedrückt wird.

Das Rohr besitzt beispielsweise am unteren Ende einen Flansch, der zwischen der Düse und den beiden Hülsen eingeklemmt wird. Dazu wird die innere Hülse, die sowohl innen als auch außen ein Gewinde besitzt, zunächst auf die Düse geschraubt, um die Auflagefläche zu vergrößern. Zusammen mit dem Rohr werden diese dann die äußere Hülse eingeschraubt, die ebenfalls ein Innen- und Außengewinde besitzt und an der Oberseite eine Verengung aufweist. Die Düseneinheit wird von unten in das Verbindungsstück eingeschraubt, das am Kühlkörper befestigt ist und vom Heizkörper umschlossen wird. Während des Drucks wird das Verbindungsstück vom Heizkörper aufgeheizt und die Wärme über die beiden Hülsen zur Düse übertragen. Es besitzt an beiden Enden ein Innengewinde und in der Mitte mehrere Aussparungen, um den Querschnitt und somit den Wärmefluss nach oben zu reduzieren.
Da zwischen der Unterkante des Kühlkörpers und der Oberkante der Düseneinheit ein Luftspalt besteht und das Verbindungsstück keinen direkten Kontakt zum Rohr hat, können hohe Temperaturgradienten im Druckmaterial erzielt werden. Dadurch verkürzt sich der Übergangsbereich, in dem das Druckmaterial in zähflüssiger Form vorliegt, was sich positiv auf das Druckergebnis auswirkt. Im Gegensatz zu anderen Bauweisen hat die direkte Befestigung des Führungsschlauchs an der Düse zum einen den Vorteil, dass es zwischen Führungsschlauch und Düse keinen Spalt gibt, in dem sich Druckmaterial ablagern kann, was allmählich zu einer Verstopfung führen kann. Zum anderen wird die Wartung vereinfacht, da die Düseneinheit als Ganzes leichter ausgewechselt werden kann.

In weiterer Folge werden die Erfindung und deren optionale Einzelkomponenten anhand der Figuren weiter beschrieben.
Fig. 1 zeigt eine schematische Schrägansicht einer Ausführungsform eines erfindungsgemäßen Druckers.
Fig. 2 zeigt eine Schrägansicht eines Details der Bewegungsvorrichtung.
Fig. 3 zeigt eine schematische Ansicht einer Bewegungsvorrichtung, wobei die Bildebene im Wesentlichen der x-y-Ebene entspricht.
Fig. 4 zeigt zwei schematische Ansichten einer Konfiguration von zwei Antriebsriemen zum Antrieb des Druckkopfs entlang der x-y-Ebene, wobei bevorzugt die beiden dargestellten Riemenführungen in zwei Parallelebenen angeordnet sind.
Fig. 5 zeigt eine schematische Schrägansicht des Andocksystems bzw. der Kupplungsvorrichtung.
Fig. 6 zeigt zwei schematische Ansichten eines Druckkopfs, wobei die linke Ansicht eine schematische Schrägansicht ist. Bei der rechten Ansicht folgt die Sichtachse im Wesentlichen der x-Achse.
Fig. 7 zeigt eine schematische Ansicht der Schritte eines Druckkopfwechsels.
Fig. 8 zeigt einen Teil der Bewegungsvorrichtung, insbesondere der Basisantriebsvorrichtung.
Fig. 9 zeigt das Druckbett und die Druckplattform, bzw. den Basiskörper und Teile der Basisantriebsvorrichtung.
Fig. 10 zeigt eine schematische Darstellung der der Schritte zur Kalibrierung der Vorrichtung.
Fig. 11 zeigt eine schematische Darstellung einer möglicherweise aufgenommenen Kalibrierkurve, bzw. einer Kalibriermatrix oder einer Kalibrierfläche.
Fig. 12 zeigt eine Ausführungsform eines Druckkopfs in einer Schrägansicht von vorne bzw. von hinten in einer Außenansicht.
Fig. 13 zeigt Details eines Druckkopfs, insbesondere des Druckkopfs aus Fig. 12, wobei auch innenliegende Details dargestellt sind.
Fig. 14 zeigt die Düseneinheit eines Druckkopfs, insbesondere eine Düsenanordnung in einer Schrägansicht, in einer mittigen Schnittansicht, in einer Detailansicht der Düse und in einer Schnittdarstellung der Düse.
Fig. 15 zeigt eine beispielhafte Messung der rückwirkenden Motorspannung bei Motorbelastung, insbesondere aus 3 Phasen: 50-70: Normalbetrieb, 70-75: erhöhte Last, 75-90: Stillstand.
Fig. 16 zeigt eine Versorgungseinheit und Materialkassette, insbesondere ein Druckmaterialreservoir.
Fig. 17 zeigt ein Gegendruckelement bzw. eine Federplatte und eine Vorschubeinheit bzw. Details des Druckmaterialreservoirs und dessen Klemmvorrichtung.

Die Figuren zeigen konkrete Ausführungsformen einzelner, gegebenenfalls voneinander unabhängiger Komponenten, wobei Merkmale dieser oder weiterer Komponenten auch dem allgemeinen Beschreibungsteil entnommen werden können. Beispielsweise können die Bewegungsvorrichtung, das Andocksystem bzw. das Kupplungssystem, das vertikale Positioniersystem bzw. die Basisantriebsvorrichtung, der Druckkopf, die Düsenanordnung des Druckkopfs sowie das Druckmaterialreservoir unabhängig voneinander variiert werden. Die dargestellten und beschriebenen Ausführungsformen der Komponenten und der Zusammenstellung der Komponenten sind jeweils eine optional mögliche Ausführungsform. Die Erfindung ergibt sich insbesondere aus den Merkmalen der Patentansprüche und aus den Merkmalen der Beschreibung. Keinesfalls ist die Erfindung auf die in den Figuren dargestellten Ausführungsformen beschränkt. Beispielsweise kann die Bewegungsvorrichtung auch zur Bewegung eines Druckkopfs eingerichtet sein, der von dem dargestellten oder beschriebenen Druckkopf abweicht. Beispielsweise kann der beschriebene Druckkopfwechsel auch mit einer anderen Bewegungsvorrichtung durchgeführt werden. Beispielsweise kann auch die Kalibrierung lediglich mit einem Druckkopf, mit zwei oder mehr Druckköpfen und insbesondere auch mit einer anderen Bewegungsvorrichtung durchgeführt werden. Beispielsweise kann die Bewegungsvorrichtung auch ohne wechselbare Druckköpfe eingesetzt werden. Beispielsweise kann das Druckmaterialreservoir auch mit anderen Druckköpfen oder anderen Bewegungsvorrichtungen zum Einsatz kommen.

Wenn nicht anders angegeben, so entsprechen die Bezugszeichen folgenden Komponenten: Gehäuse 1, Bauraum 2, Steuerungseinheit 3, erstes Druckmaterial-Reservoir (für Modellmaterial oder Stützmaterial) 4, zweites Druckmaterial-Reservoir (für Modellmaterial oder Stützmaterial) 5, erster Versorgungsschlauch 6, zweiter Versorgungsschlauch 7, erster Druckkopf 8, zweiter Druckkopf 9, x-Achse 10, y-Achse 11, Druckobjekt 12, Stützstruktur 13, Druckbett bzw. Basiskörper 14, z-Achse 15, Andockeinheit 16, Zahnriemen 17, Führungsschlitten (in X-Richtung) 18, Führungsschiene (in X-Richtung) 19, Querbalken 20, Führungsschlitten oder Linearlager (in Y-Richtung) 21, Führungsschiene (in Y-Richtung) 22, Riemenantrieb oder Antriebseinheit 23, Lichtschranke (für Y-Achse) 24, Rahmen 25, Umlenkrolle 26, Riemenspanner 27, Seitenplatte 28, Lichtschranke (für Y-Achse) 29, Verriegelungseinheit 30, Umlenkrolle 31, Düsen-Abstreifer 32, Lichtleiste 33, Verbindungsplatte 34, Andockmagnet 35, Andockplatte 36 Schraube (zur Befestigung der Zahnriemen) 37, Loch (zur Aufnahme des Riegels) 38, vorderes Stützprofil 39, hinteres Stützprofil 40, Führungsschlitten oder Linearlager (in Z-Richtung) 41, Führungsschiene (in Z-Richtung) 42, Spindelmutter 43, Spindel oder Kugelumlaufspindel 44, Spindel-Kupplung 45, Schrittmotor (für Z-Achse) 46, Axiallager 47, Federstahlplatte 48, Druckoberfläche 49, Kunststoffplatte 50, Niete (zur Befestigung der Kunststoffplatten) 51, Trägerplatte 52, Abstandsplatte 53, hitzeresistenter Magnet 54, Heizmatte 55, Isoliermatte 56, Abstandsbolzen 57, Senkschraube (zur Befestigung der Trägerplatte) 58, Druckkopf-Vorderteil 59, Druckkopf-Mittelteil 60, Druckkopf-Abdeckplatte 61, Aussparung (zur Zahnriemen-Durchführung) 62, Schrittmotor (zur Materialextrusion) 63, Flachbandkabel 64, Schmelzeinheit 65, Axiallüfter 66, Radiallüfter 67, Luftkanal 68, Führungsrille 70, Gegendruck-Einheit 71, Antriebsrolle 72, Kühlkörper 73, Düseneinheit 74, Kühlkörper 75, Temperaturbarriere 76, Heizelement 77, Führungsrohr oder Führungsschlauch 78, Verbindungshülse 79, Düse 80, Einschubschacht 81, Führungsschienen 82, Auswurfeinheit 83, Verriegelungseinheit 84, berührungslose Übertragungseinrichtung wie beispielsweise RFID- oder NFC-Einheit oder berührungslose Datenübertragungseinheit 85, Vorschubeinheit 86, Adaptereinheit 87, Materialkassette 88, Druckmaterial (Modellmaterial oder Stützmaterial) 89, Druckmaterial-Spule 90, Außenschale 91, Federplatte oder Gegendruck-Element (gegebenenfalls Kunststoff-Platte) 92, berührungsloser Datenübertragungschip oder berührungslose Übertragungseinrichtung wie beispielsweise RFID- oder NFC-Chip 93, Bewegungsvorrichtung 94, Druckmaterialleitung 95, Datenverarbeitungseinrichtung 96, erstes Trägerelement 97, Antriebsschlitten 98, Kupplungsvorrichtung 99, Druckkopfschlitten 100, Schienenabschnitt 101, Endbereich 102, zweites Trägerelement 103, Haltevorrichtung 104, Parkposition 105, Halteelement 106, bewegbarer Riegel 107, Maschinengestell 108, x-y-Kinematik 109, x-y-Ebene 110, erster Antriebsriemen 111, erster Riemenantrieb 112, Riemenantriebsrad 113, erste Antriebsebene 114, zweiter Riemenantrieb 115, zweiter Antriebsriemen 116, zweite Antriebsebene 117, Verbindungsstelle 118, Eckposition 119, Basisantriebsvorrichtung 120, Basisantrieb 121, Führungselement 122, Linearantrieb 123, Linearführung 124, Buchse 125, Druckplattform 126, Heizvorrichtung 127, Druckkopfgrundkörper 128, Düsenanordnung 129, Entkopplungsstelle 130, Innenseite 131, Klemmvorrichtung 132, Klemmstellung 133, Einschubschacht 134, Klemmbacke 135, Förderstellung 136, Druckmaterialantrieb 137, Antriebsrad 138, Befestigungsvorrichtung 139, Referenzebene 140, Oberfläche (des Basiskörpers) 141, erste Druckschicht 142, zweite Druckschicht 143, Verbindungsstelle (der Düsenanordnung mit dem Druckkopfgrundkörper) 144.

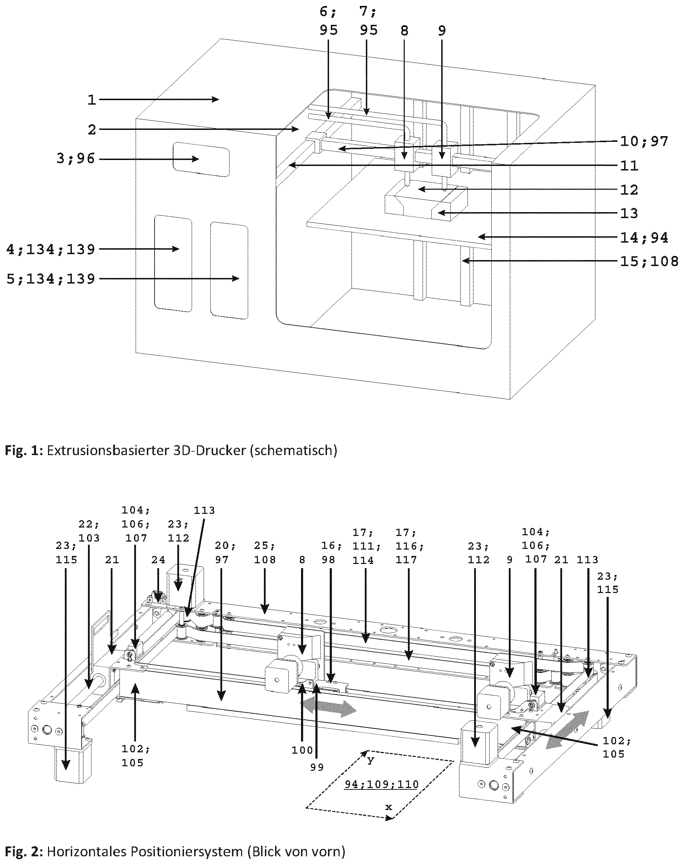

### Schematische Außenansicht (Fig. 1):

Der vorliegende extrusionsbasierte 3D-Drucker umfasst ein Gehäuse (1) mit einem Bauraum (2), einer Steuerungseinheit (3) und je einer Versorgungseinheit für thermoplastisches Modell- bzw. Stützmaterial (4/5), das in Form von Filamenten über Versorgungsschläuche (6/7) zu den beiden Druckköpfen (8/9) im Inneren des Bauraumes (2) befördert wird.
Die Druckköpfe (8/9), die entlang der X/Y-Achse (10/11) horizontal positioniert werden können, tragen das Druckobjekt (12) und die Stützstrukturen (13) Schicht für Schicht auf das Druckbett (14) auf, das entlang der Z-Achse (15) vertikal bewegt werden kann. Die Positionierung der Druckköpfe (8/9) und des Druckbetts (14) sowie die selektive Material-Extrusion werden von der Steuerungseinheit (3) koordiniert.

### Gehäuse und Bauraum (Fig. 1)

Der Bauraum (2) wird an den Seiten sowie hinten und unten vom Gehäuse (1) umschlossen. Eine transparente Schiebetür - nicht dargestellt - bildet den vorderen und oberen Abschluss, so dass das Druckobjekt (12) während des Druckvorgangs vor äußeren Einflüssen (z.B. Luftzug) geschützt ist und die Gefahr von Verletzungen durch bewegliche oder heiße Teile im Inneren des Bauraumes (2) minimiert wird. Lüfter in der Rückwand - nicht dargestellt - sorgen für einen kontinuierlichen Luftaustausch, um die elektronischen Komponenten im Inneren des Bauraumes (2) vor Überhitzung zu schützen.

Da das Gehäuse (1) an der vorderen Oberkante keine Querverstrebung besitzt, wird der Zugang zum Inneren des Bauraumes (2) wesentlich erleichtert. Daraus resultierende Stabilitätsnachteile werden durch entsprechende Verstärkungen an anderer Stelle kompensiert. Aus konstruktiven Gründen besitzt das Gehäuse (1) jeweils doppelte Seitenwände sowie eine Trennwand, die den Bauraum (2) von den Steuerungs- und Versorgungseinheiten (3, 4, 5) auf der linken Seite abgrenzt.
Die transparente Schiebetür - nicht dargestellt -, die von der vorderen Unterkante bis zur hinteren Oberkante des Gehäuses (1) reicht, erlaubt auch während des Druckvorgangs ungehinderte Sicht auf das Druckobjekt (12) aus verschiedenen Blickwinkeln. Über Teleskopschienen an der Unterseite sowie an der Rückseite des Gehäuses (1) kann die Schiebetür nach links aufgeschoben werden und verdeckt dabei die Steuerungs- und Versorgungseinheiten (3, 4, 5), so dass der vorhandene Platz optimal genutzt wird und der Druckvorgang aus Sicherheitsgründen nur bei geschlossener Tür gestartet werden kann. Sollte die Tür während des Druckvorgangs geöffnet werden, wird dies von einem Sensor erkannt und der Druck sofort unterbrochen.

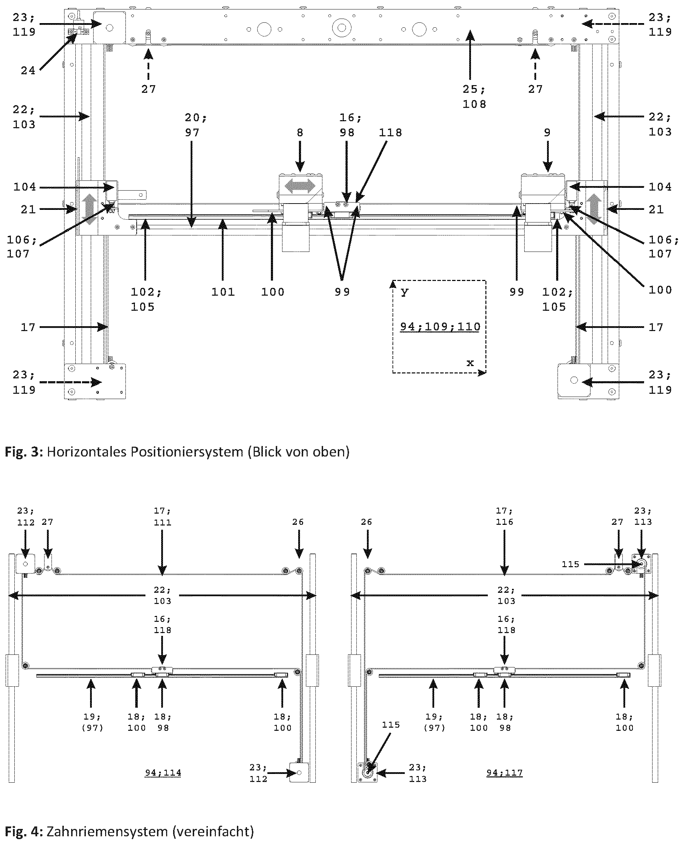

### Horizontales Positioniersystem (Fig. 2 und Fig. 3)

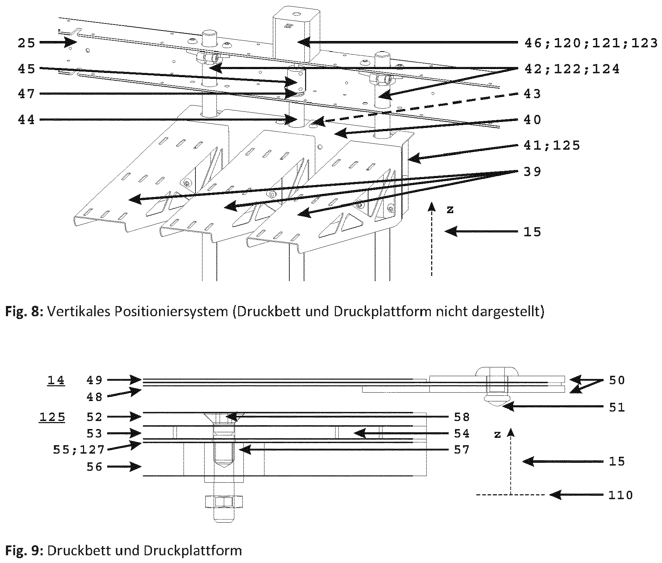

Beide Druckköpfe (8, 9) sowie die dazwischen befindliche Andockeinheit (16), die mit Hilfe von zwei Zahnriemen (17) bewegt werden kann, sind über Führungsschlitten (18) mit derselben Führungsschiene (19) verbunden. Während der eine Druckkopf (8) mit der Andockeinheit (16) verbunden ist und somit in X-Richtung (10) positioniert werden kann ("Druckposition"), wartet der andere Druckkopf (9) am Ende der Führungsschiene (19) außerhalb des Druckbereichs ("Parkposition").
Der Querbalken (20), an dem die Führungsschiene (19) befestigt ist, ist über Linearlager (21) an den Enden mit den seitlichen Führungsschienen (22) verbunden und somit in Y-Richtung (11) frei beweglich. Über die beiden Zahnriemen (17) kann der Querbalken (20) und somit der aktive Druckkopf (8) in Y-Richtung (11) positioniert werden. Die beiden Zahnriemen (17) werden von jeweils zwei Antriebseinheiten (23) bewegt, die aus einem Schrittmotor und einer Antriebsrolle bestehen und am Gehäuse (1) installiert sind.
Die zwei Führungsschienen (22), die vier Antriebseinheiten (23), eine Lichtschranke (24) zur Referenzierung der Y-Achse, sowie mehrere Umlenkrollen und Teile des vertikalen Positioniersystems (siehe Fig. 8) sind in einem Rahmen (25) aus U-förmigen Stahlprofilen montiert. Dieser bietet zusätzliche Stabilität und erlaubt es, das horizontale Positioniersystem als Ganzes vorzumontieren. Abstandshalter zwischen Rahmen (25) und Antriebseinheiten (23) erleichtern die Montage der Umlenkrollen und reduzieren die Übertragung von Vibrationen. Da die Schrauben, mit denen die Wellenhalter am Rahmen (25) befestigt sind, von außen zugänglich sind, können die Führungsschienen (22) nach der Endmontage noch ausgerichtet werden.

### Zahnriemensystem (Fig. 4)

Jeder der beiden Zahnriemen (17) ist mit beiden Enden an der Andockeinheit (16) befestigt und verläuft zunächst nach außen, bis er am Ende des Querbalkens (20) nach vorne umgelenkt wird. Nach Passieren der vorderen Antriebseinheit (23) verläuft er in entgegengesetzter Richtung zur hinteren Umlenkrolle (26) und von dort aus weiter zum Riemenspanner (27) und zur hinteren Antriebseinheit (23) auf der gegenüber liegenden Seite. Nach Passieren der hinteren Antriebseinheit (23) verläuft er wieder nach vorne und wird am Ende des Querbalkens (20) zurück zur Andockeinheit (16) umgelenkt.
Der zweite Zahnriemen, der einen gespiegelten Verlauf aufweist, befindet sich auf einer zweiten vertikalen Ebene, um eine Überschneidung mit dem ersten Zahnriemen zu vermeiden. Im Gegensatz zu einem herkömmlichen Zahnriemensystem, bei dem sich mindestens ein Antriebsmotor auf dem beweglichen Querbalken befindet, sind beim verwendeten System alle Antriebsmotoren am Gehäuse befestigt, so dass aufgrund der geringeren beweglichen Massen höhere Beschleunigungen sowie Verfahr-Geschwindigkeiten erreicht werden können. Im Gegensatz zu einem herkömmlichen System verhindert die doppelte Zahnriemenführung ein Verkanten des Querbalkens, was negative Auswirkungen auf die Positioniergenauigkeit des Druckkopfes sowie auf den Verschleiß der Führungselemente hätte.

Die vorderen Umlenkrollen dienen dazu, den Umschlingungswinkel des Zahnriemens (17) um die vorderen Antriebseinheiten (23) zur besseren Kraftübertragung zu vergrößern und den Trum-Abstand vor und nach Umlaufen der Antriebseinheit (23) zu reduzieren. Dadurch kann der Zahnriemen-Durchlass im Querbalken (20) verkleinert werden, was sich positiv auf dessen Steifigkeit sowie auf die Raumausnutzung auswirkt. Die hinteren Umlenkrollen vergrößern sowohl den Umschlingungswinkel des Zahnriemens (17) um die hinteren Antriebseinheiten (23) als auch den Abstand zwischen Zahnriemen (17) und Rahmen (25), um die Montage der Riemenspanner (27) sowie des vertikalen Positioniersystems (siehe Fig. 8) zu ermöglichen.
Durch die synchrone Verwendung von zwei Antriebsmotoren pro Zahnriemen können nicht nur höhere Beschleunigungskräfte sondern auch höhere Positioniergenauigkeiten erreicht werden, da die Trum-Länge zwischen Antriebsmotor und Druckkopf verkürzt und die Elastizität des Zahnriemensystems reduziert wird.

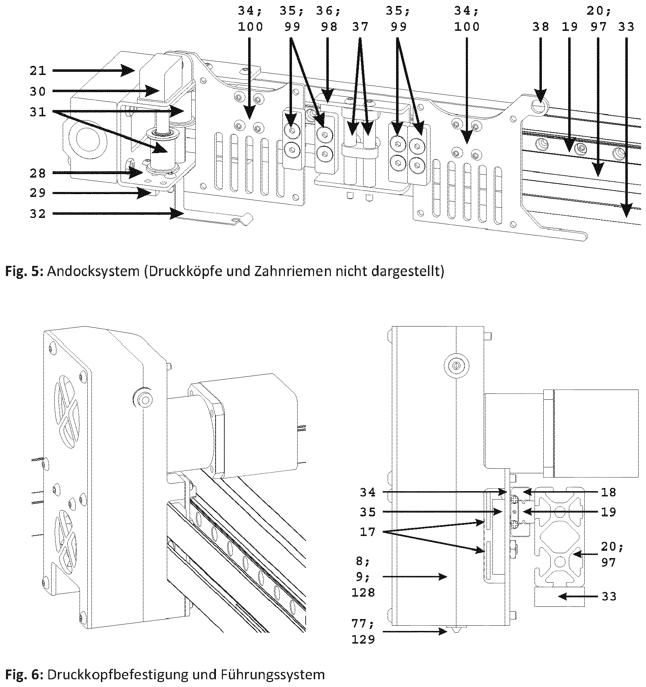

### Lineares Führungs- und Andocksystem (Fig. 5 und Fig. 6)

Die beiden Enden des Querbalkens (20) sind über U-förmige Seitenplatten (28) mit den Linearlagern (21) verbunden, die sich auf den seitlichen Führungsschienen (22) in Y-Richtung frei bewegen können. Auf der Seitenplatte (28) befinden sich zudem eine Lichtschranke (29) zur Referenzierung der X-Achse, eine Verriegelungseinheit (30), zwei Umlenkrollen (31) sowie ein Düsen-Abstreifer (32). Eine Lichtleiste (33) an der Unterseite des Querbalkens (20) beleuchtet das Druckbett (14) mit dem Druckobjekt (12) von oben.

Die Führungsschiene (19) mit den drei Führungsschlitten (18) ist auf der Rückseite des Querbalkens (20) montiert. Die beiden äußeren Schlitten sind jeweils über eine Verbindungsplatte (34) mit einem Druckkopf (8 bzw. 9) verbunden. Dazwischen befindet sich ein Durchlass für die beiden Zahnriemen (17) sowie für den Andockmagnet (35). Der mittlere Schlitten ist mit der Andockeinheit (16) verbunden, die sich aus einer U-förmigen Befestigungsplatte (36) mit zwei Schrauben (37) zur Befestigung der Zahnriemen (17) sowie je einem Andockmagneten (35) auf beiden Seiten zusammensetzt.
Während des Druckvorgangs ist der aktive Druckkopf (8) über den auf der Verbindungsplatte (34) montierten Andockmagneten (35) mit der Andockeinheit (16) verbunden und kann somit positioniert werden, während der inaktive Druckkopf (9) von der Verriegelungseinheit (30) in seiner Parkposition am Ende der Führungsschiene (19) festgehalten wird.

Um den aktiven Druckkopf (8) zu parken, wird er von der Andockeinheit (16) in seine Parkposition bewegt und dort von der Verriegelungseinheit (30) festgehalten, indem der Riegel - nicht sichtbar - in ein entsprechendes Loch (38) in der Verbindungsplatte (34) ausgefahren wird. Bewegt sich die Andockeinheit (16) nun wieder zur Mitte des Druckbereichs, werden die beiden Andockmagneten (35) durch die Kraft der Zahnriemen (17) auseinander gezogen und somit der Druckkopf (8) von der Andockeinheit (16) getrennt.

Um den geparkten Druckkopf (9) zu aktivieren, fährt die Andockeinheit (16) zu dessen Parkposition bis sich die Andockmagneten (35) verbinden, bevor der Druckkopf (9) durch Öffnen der Verriegelungseinheit (30) freigegeben wird. Anschließend fährt die Andockeinheit (16) zusammen mit dem Druckkopf (9) wieder in den Druckbereich und passiert dabei den Düsen-Abstreifer (32), um vorher abgelassenes und eventuell nachlaufendes Druckmaterial zu entfernen bevor der Druck mit dem neuen Druckkopf (9) fortgesetzt wird.

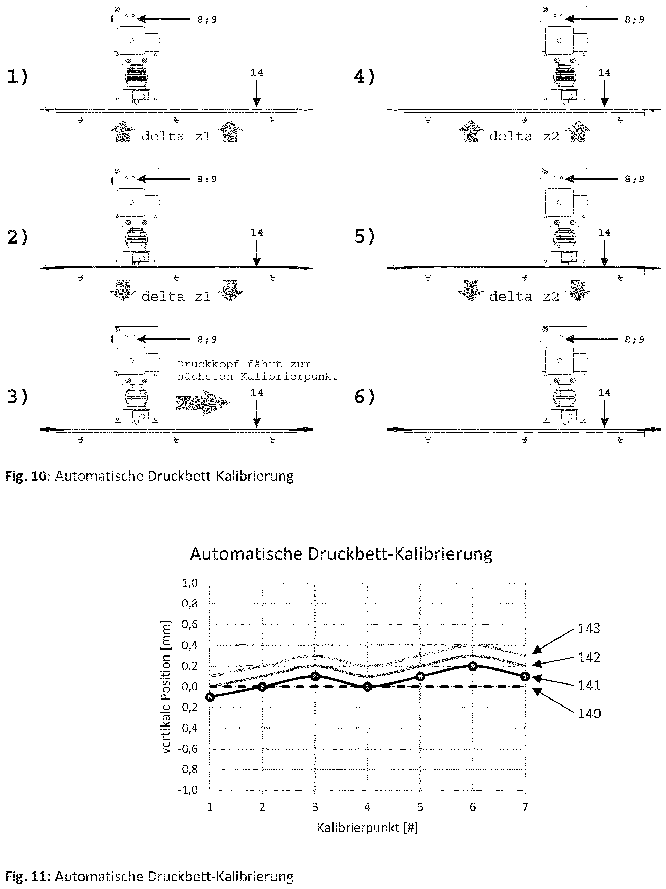

Da sich der geparkte Druckkopf (9) außerhalb des Druckbereichs befindet, besteht nicht die Gefahr, dass das Druckobjekt (12) durch unkontrolliert nachlaufendes Druckmaterial verunreinigt wird. Um dies zu vermeiden, müsste die inaktive Düse bei einem Zwei-Düsen-Druckkopf vor einem Materialwechsel vollständig abgekühlt und vor einem erneuten Materialwechsel wieder aufgeheizt werden, was deutlich mehr Zeit in Anspruch nehmen würde. Alternativ müsste die inaktive Düse mechanisch angehoben und abgedeckt werden, was sehr aufwändig umzusetzen wäre, insbesondere vor dem Hintergrund der engen Toleranzen beim Abstand zum Druckbett (14).
Da nur der aktive Druckkopf (8) in X-Richtung bewegt werden muss, während der inaktive Druckkopf (9) in seiner Parkposition bleibt, können bei gleicher Zahnriemenkraft aufgrund der geringeren beweglichen Masse höhere Beschleunigungen und somit höhere Druckgeschwindigkeiten erreicht werden. Zudem wird die automatische Kalibrierung (siehe Fig. 10) wesentlich erleichtert, da das Druckbett (14) von beiden Druckköpfen separat abgetastet werden kann, während sich der jeweils andere Druckkopf in seiner Parkposition außerhalb des Druckbereichs befindet. Anderenfalls müsste der vertikale Abstand beider Düsen mit großem Aufwand manuell eingestellt werden.

Zusätzlich besteht die Möglichkeit, beide Druckköpfe gleichzeitig aus dem Druckbereich zu entfernen, so dass das Druckbett (14) bis zur Unterseite des Querbalkens (20) hochgefahren werden kann. Dies erlaubt es, das Druckobjekt (12) nach Beendigung des Druckvorganges automatisch auszuwerfen, indem es mit Hilfe des Querbalkens (20) nach vorne oder hinten vom Druckbett (14) geschoben wird.

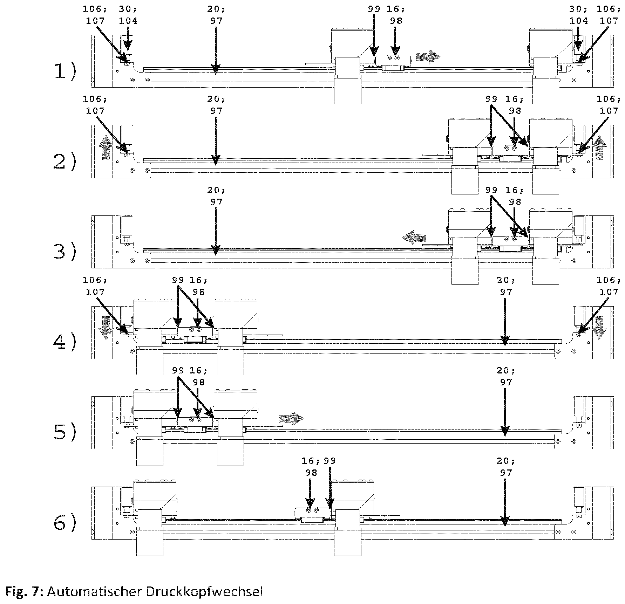

### Automatischer Druckkopfwechsel (Fig.7)

Der automatische Druckkopfwechsel läuft beispielsweise wie folgt ab:
1) Zunächst wird die Andockeinheit (16) zusammen mit dem ersten Druckkopf (8) zur Parkposition des zweiten Druckkopfes (9) bewegt.
2) Als nächstes werden die Verriegelungseinheiten (30) auf beiden Seiten geöffnet, so dass der zweite Druckkopf (9) freigegeben wird.
3) Anschließend wird die Andockeinheit (16) zusammen mit beiden Druckköpfen (8/9) zur Parkposition des ersten Druckkopfes bewegt.
4) Dort angekommen werden die beiden Verriegelungseinheiten (30) wieder geschlossen, so dass der erste Druckkopf (8) in seiner Parkposition festgehalten wird.
5) Schließlich wird die Andockeinheit (16) zusammen mit dem zweiten Druckkopf (9) wieder zurück in den Druckbereich bewegt.
6) Nun befindet sich der zweite Druckkopf (9) in Druckposition.

Im Gegensatz zu einem Druckkopfwechsel, bei dem der aktive Druckkopf (8) geparkt wird bevor der geparkte Druckkopf (9) reaktiviert wird, können die beiden Verriegelungseinheiten (30) zur Vereinfachung der Steuerung parallel geschaltet werden. Würden die Verriegelungseinheiten (30) vor dem Andocken des zweiten Druckkopfes (9) geöffnet werden, kann sich dieser z. B. durch Vibrationen aus seiner Parkposition lösen und bei Annäherung der Andockeinheit (16) unkontrolliert mit dieser zusammenstoßen und somit die Andockmagneten (35) beschädigen. Außerdem ist dadurch sichergestellt, dass die automatische Referenzierung der X-Achse auch noch nach einem Systemneustart während des Druckkopfwechsels möglich ist, da zu jeder Zeit mindestens eine der beiden Lichtschranken (29) unverdeckt ist.

### Vertikales Positioniersystem (Fig. 8)

Die Druckplattform - nicht dargestellt - wird von einer Stützkonstruktion getragen, die sich hier aus drei U-förmigen Stützprofilen (39) und einer L-förmigen Rückwand (40) zusammensetzt. An letzterer sind zwei Linearlager (41) montiert, die sich auf zwei Führungsschienen (42) in Z-Richtung vertikal bewegen lassen. Die Führungsschienen (42) sind am Rahmen (25) sowie an der Unterseite des Gehäuses (nicht dargestellt) befestigt, so dass sie auch noch nach der Endmontage ausgerichtet werden können. Die vertikale Positionierung erfolgt über eine Spindelmutter (43), die ebenfalls an der Rückwand der Stützkonstruktion (40) befestigt ist und mit Hilfe einer Kugelumlaufspindel (44) vertikal bewegt werden kann. Letztere ist über eine Kupplung (45) mit einem Schrittmotor (46) verbunden, der an der Oberseite des Rahmens (25) befestigt ist. Zwischen Kupplung (45) und Unterseite des Rahmens (25) befindet sich ein Axiallager (47), um den Schrittmotor (46) von den auftretenden Axialkräften zu entlasten.

### Druckbett und Druckplattform (Fig. 9)

Das entfernbare Druckbett (14) besteht beispielsweise aus einer ferromagnetischen Federstahlplatte (48) mit einer speziellen Druckoberfläche (49) und je zwei Kunststoffplatten (50) auf beiden Seiten, die von Nieten (51) gehalten werden und beim Entfernen des Druckbetts (14) als Griffe dienen, um Verletzungen durch scharfe Kanten oder Verbrennungen durch heiße Oberflächen zu vermeiden. Zudem können die oberen Kunststoffplatten (50) dafür genutzt werden, die Druckoberfläche (49) auf der Federstahlplatte (48) zu fixieren, während die unteren Kunststoffplatten (50) dabei helfen, das Druckbett (14) auf der darunter befindlichen Druckplattform zu zentrieren. Die Druckplattform besteht ebenfalls aus mehreren Schichten. Unter der aus ferromagnetischem Stahl gefertigten Trägerplatte (52) befindet sich eine Abstandsplatte (53) mit Aussparungen für hitzeresistente Magnete (54), die die Trägerplatte (52) von unten magnetisieren, so dass das ferromagnetische Druckbett (14) darauf haftet. Unter der Abstandsplatte (53), die zwecks Wärmeleitung und Gewichtseinsparung aus Aluminium bestehen kann, ist eine Heizmatte (55) befestigt, die das Druckbett (14) während des Drucks von unten aufheizt, um die Haftung des Druckobjektes (12) auf der Druckoberfläche (49) zu verbessern. Eine Isoliermatte (56) unterhalb der Heizmatte (55) reduziert nach unten auftretende Wärmeverluste.
Da die Isoliermatte (56) nicht genügend Stabilität bietet, sind Trägerplatte (52) und Abstandsplatte (53) über Abstandsbolzen (57) mit den Stützprofilen (39) des vertikalen Positioniersystems verbunden. Zur Befestigung werden Senkschrauben (58) verwendet, um die Wärmeleitung zum Druckbett (14) durch eine ebene Kontaktfläche zwischen Trägerplatte (52) und Federstahlplatte (48) zu verbessern.
Ein entfernbares Druckbett (14) hat den Vorteil, dass es nach dem Druck zusammen mit dem Druckobjekt (12) aus dem Bauraum (2) entnommen werden kann, ohne das Druckobjekt (12) vorher ablösen zu müssen. Durch die Verwendung der Federstahlplatte (48) wird zudem das Ablösen erleichtert, da sich das Druckbett (14) an den Seiten leicht nach hinten biegen lässt. Alternativ kann das Druckbett (14) zusammen mit dem Druckobjekt (12) in ein Lösungsmittel gelegt werden, um die löslichen Stützstrukturen (13) zu entfernen und das Druckobjekt (12) somit vom Druckbett (14) abzulösen. Da die Druckoberfläche (49) mit der Zeit abnutzen kann, kann das entfernbare Druckbett (14) zudem sehr leicht ausgetauscht werden.

### Automatische Druckbett-Kalibrierung (Fig.10 und Fig. 11)

Für einen zuverlässigen Druck ist es wichtig, dass der Abstand zwischen der Druckoberfläche (49) und der Düse des Druckkopfes (8, 9) sehr genau eingestellt ist, da ein zu geringer Abstand zu einer Verstopfung und ein zu großer Abstand zu einer Ablösung des Druckobjektes (12) oder der Stützstrukturen (13) von der Druckoberfläche (49) führen kann. Aufgrund fertigungs- und montagebedingter Ungenauigkeiten ist es daher vorteilhaft, den Abstand vor Inbetriebnahme des 3D-Druckers genau zu kalibrieren. Um die bestmöglichen Druckergebnisse zu erzielen, sollte dies vor jedem neuen Druckauftrag erfolgen.

Im Gegensatz zu einer manuellen Kalibrierung, die vor allem bei mehreren Druckköpfen (8, 9) sehr aufwändig und anspruchsvoll ist, hilft die automatische Kalibrierung, Zeit zu sparen und Fehler zu vermeiden. Dazu wird das Druckbett (14) schachbrettartig in mindestens drei Kalibrierpunkte unterteilt, die mit dem Druckkopf (8) der Reihe nach angefahren werden. An jedem Kalibrierpunkt wird das Druckbett (14) nach oben gefahren bis es den Druckkopf (8) berührt und die dazugehörige Position gespeichert. Danach wird es wieder nach unten gefahren und die Prozedur am nächsten Kalibrierpunkt wiederholt.
Nachdem alle Kalibrierpunkte angefahren wurden, wird aus den gesammelten Daten per Regression die Ausrichtung und die Oberflächenkontur (bei mehr als 3 Kalibrierpunkten) des Druckbetts (14) ermittelt. Beim späteren Druck kann so die vertikale Position des Druckbetts (14) in Abhängigkeit der horizontalen Position des Druckkopfes (8) dynamisch angepasst werden, so dass die Düse immer den gleichen Abstand zur Druckoberfläche (49) bzw. zum Druckobjekt (12) aufweist. Eine Schrägstellung des Druckobjektes (12) infolge eines schräg stehenden Druckbetts (14) kann durch eine entsprechende horizontale Verschiebung der einzelnen Schichten ebenfalls kompensiert werden.
Durch Anfahren eines beliebigen Kalibrierpunktes mit dem zweiten Druckkopf (9) kann zudem der vertikale Abstand zwischen den Düsen beider Druckköpfe ermittelt werden, der beim späteren Druck ebenfalls kompensiert werden kann. Bei einem Zwei-Düsen-Druckkopf oder einer mechanischen Kalibrierung wäre eine Kompensation des vertikalen Abstandes zweier Düsen nicht möglich. Ein weiterer Vorteil der dynamischen Kompensation mit mehr als drei Kalibrierpunkten ist zudem die Möglichkeit, Unebenheiten der Druckoberfläche (49) auszugleichen.

Der genaue Berührpunkt wird beispielsweise mit Hilfe eines Beschleunigungssensors - nicht dargestellt - ermittelt, der die bei der Kollision von Druckkopf (8, 9) und Druckbett (14) auftretenden Erschütterungen registriert. Eine weitere Möglichkeit zur Bestimmung des Berührpunktes ist die Überwachung des Motorsignals ("back-EMF") zum Antrieb des vertikalen Positioniersystems, das sich ändert sobald das nach oben fahrende Druckbett (14) auf einen Widerstand trifft.
Da die Kalibrierung bevorzugt auf dem direkten Kontakt zwischen Düsenspitze und Druckoberfläche (49) beruht, treten im Gegensatz zu anderen Verfahren (mit separater Oberflächen-Abtastung) keine relativen Fehler auf. So besteht bei der Verwendung eines ausfahrbaren Mikroschalters ("z-probe") zur Abtastung der Druckoberfläche (49) zwischen Düsenspitze und Umschaltpunkt des Mikroschalters immer ein fehlerbehafteter Abstand, der sich negativ auf die Genauigkeit der Kalibrierung auswirkt.
Im vorliegenden Fall werden beispielsweise neunundvierzig schachbrettartig verteilte Kalibrierpunkte verwendet, die jeweils dreimal angefahren werden, um die Genauigkeit der Messungen durch Mittelwertbildung zu verbessern. Ist die Abweichung einer Messung vom Mittelwert zu groß, werden die drei Messungen wiederholt, um falsche Messwerte durch äußere Einflüsse zu vermeiden. Es hat sich herausgestellt, dass die Kalibrierung bei kalter Düse am zuverlässigsten funktioniert, da ansonsten die Messergebnisse des Beschleunigungssensors durch die Vibrationen des bei heißer Düse laufenden Lüfters oder durch aus der heißen Düse austretendes Druckmaterial verfälscht werden können.
Während des Drucks kann ein gegebenenfalls vorgesehener Beschleunigungssensor außerdem zur Messung der Bewegungsfrequenz genutzt werden. Sobald diese einen kritischen Frequenzbereich erreicht, kann die Druckgeschwindigkeit temporär angepasst werden, um anderenfalls auftretende Resonanzen zu vermeiden.
Fig. 11 zeigt insbesondere eine schematische Darstellung der mathematischen Abbildung einer Referenzebene 140, einer Oberfläche (des Basiskörpers) 141, einer ersten Druckschicht 142 und einer zweiten Druckschicht 143.

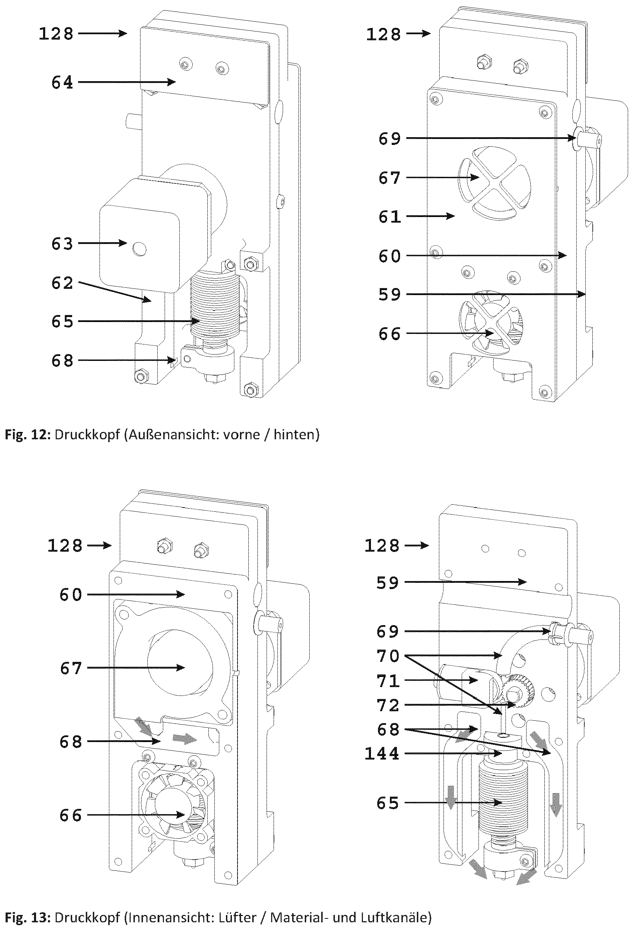

### Druckkopf (Fig. 12, Fig. 13)

Der Druckkopf (8, 9) besteht beispielsweise unter anderem aus einem spritzgegossenem Vorder- und Mittelteil (59, 60) sowie aus einer rückwärtigen Abdeckplatte (61). Das Vorderteil (59) wird an der Verbindungsplatte (34) befestigt und besitzt auf der Vorderseite eine Aussparung (62) für die beiden Zahnriemen (17) und den Andockmagneten (35). Am Vorderteil (59) sind außerdem ein Schrittmotor (63) für die Materialextrusion sowie ein Flachbandkabel (64) für die Stromversorgung und Signalübertragung befestigt.
In der Aussparung an der Unterseite des Druckkopfes (8, 9) befindet sich die Schmelzeinheit (65), in der das feste Druckmaterial verflüssigt wird, bevor es auf das Druckbett (14) aufgetragen wird. Diese wird von einem an der Abdeckplatte (61) befestigten Axiallüfter (66) gekühlt. Die Kühlung des aufgetragenen Druckmaterials erfolgt durch einen zwischen Mittelteil (60) und Abdeckplatte (61) befestigten Radiallüfter (67) in Verbindung mit einem innen verlaufenden Luftkanal (68).
Der Versorgungsschlauch (6, 7), über den das Druckmaterial seitlich in den Druckkopf (8, 9) gelangt, wird von einer selbstgreifenden Schlauchkupplung (69) gehalten. Über eine Führungsrille (70) wird es nach unten geleitet, wo es von einem horizontal beweglichen Schlitten (71) mit einer Feder auf der einen und einer Leerlaufrolle auf der anderen Seite gegen die Antriebsrolle (72) gedrückt wird. Diese wird vom Schrittmotor (63) angetrieben und befördert das Druckmaterial in die darunter liegende Schmelzeinheit (65), die an ihrem oberen Ende zwischen Vorder- und Mittelteil (59, 60) befestigt ist.
Um die Erstarrung des extrudierten Materials auf dem Druckbett (14) zu beschleunigen und somit die Druckqualität zu verbessern, kann es in allen Ausführungsformen gekühlt werden. Dazu erzeugt der Radiallüfter (67) einen Luftstrom, der durch Öffnungen im Mittelteil (60) nach vorne und durch Luftkanäle (68) zwischen Vorder- und Mittelteil (59/60) auf beiden Seiten der Schmelzeinheit (65) nach unten geleitet wird. Durch Auslässe am unteren Ende wird der Luftstrom schließlich nach innen geleitet, wo das flüssige Material aus der Düse austritt. Im Vergleich zu einer einseitigen Kühlung wird durch die zweiseitige Kühlung eine deutliche Verbesserung der Druckqualität erreicht.

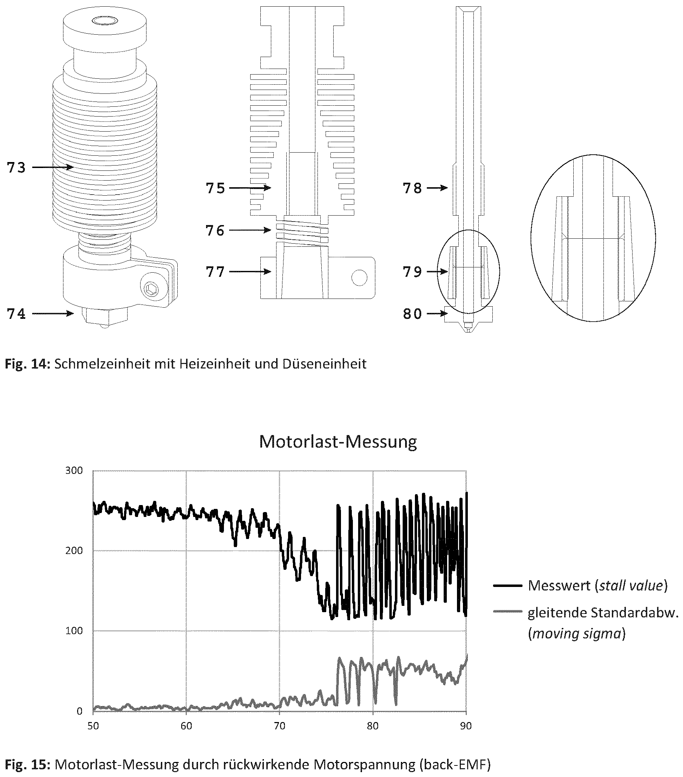

### Schmelzeinheit (Fig. 14)

Die Düsenanordnung oder Schmelzeinheit (65) umfasst eine Heizeinheit (73) und eine Düseneinheit (74), in der das Druckmaterial geführt wird. Die Heizeinheit (73) umfasst einen Kühlkörper (75), an dem über eine spiralförmige Temperaturbarriere (76) ein ringförmiges Heizelement (77) befestigt ist. Die Düseneinheit (74) umfasst ein Führungsrohr (78), das über eine konische Verbindungshülse (79) an der Düse (80) befestigt ist und von unten in den Kühlkörper (75) eingeschraubt wird, um so die Düseneinheit (74) mit der Heizeinheit (73) zu verbinden.
Da die Düse (80) mit der Zeit verstopfen kann, ist eine hohe Wartungsfreundlichkeit von entscheidender Bedeutung. Durch die Verwendung einer Düseneinheit (74), die als Ganzes ausgetauscht werden kann, wird der Düsenwechsel deutlich erleichtert, da die Düse (80) im Gegensatz zur herkömmlichen Bauweise, bei der die Düse (74) direkt mit dem Heizelement (77) verbunden ist, weder vorher aufgeheizt noch von diesem getrennt werden muss.
Wird die Düseneinheit (74) in die Heizeinheit (73) geschraubt, wird die konische Verbindungshülse (79) gegen die ebenfalls konische Innenseite am unteren Ende des Kühlkörper (75) gedrückt, so dass die Wärme vom Heizelement (73) über diesen und die Verbindungshülse (79) auf die Düse (80) übertragen werden kann. Die spiralförmige Temperaturbarriere (76) verringert dabei den Wärmeabfluss nach oben und dient gleichzeitig als Federung, um den Kontakt zwischen Heizeinheit (73) und Düseneinheit (74) und somit die Wärmeübertragung auf die Düse (80) zu verbessern.
Für die Druckqualität ist es von entscheidender Bedeutung, das Druckmaterial schnell zu erhitzen und den Übergangsbereich zwischen festem und flüssigem Zustand durch einen hohen Temperaturgradienten im Druckmaterial möglichst kurz zu halten. Aus diesem Grund muss die Wärmeübertragung zur Düse (80) möglichst hoch, nach oben jedoch möglichst gering sein, wobei nach oben auftretende Wärmeverluste durch eine aktive Kühlung im oberen Bereich schnell abgeführt werden müssen.
Zur besseren Abfuhr der nach oben auftretenden Wärmeverluste sowie zur besseren Wärmeübertragung auf die Düse (80) sollte der Kühlkörper (75) aus einem thermisch gut leitenden Material wie Aluminium hergestellt werden. Gleiches gilt für die Verbindungshülse (79) sowie für die Düse (80). Dagegen sollte das Führungsrohr (78) aus einem thermisch schlecht leitenden Material wie Edelstahl oder Titan gefertigt sein, um einen hohen Temperaturgradienten entlang des Druckmaterials zu ermöglichen. Um die Lebensdauer der Düseneinheit (74) zu erhöhen, kann die Innenseite des Führungsrohrs (78) eine möglichst geringe Reibung gegenüber dem teilweise viskosen Druckmaterial aufweisen, was durch Oberflächenveredelungsverfahren wie Polieren, Härten, Galvanisieren oder Beschichten erreicht werden kann. Insbesondere kommen dafür Polieren und Nitrieren sowie eine galvanische PTFE-Beschichtung der Innenseite in Betracht.

### Automatische Materialfluss-Überwachung (Fig. 15)

Durch Messung der rückwirkenden Motorspannung ("back-EMF") kann die Motorlast im Druckkopf ermittelt werden, um potentielle Extrusionsprobleme (z.B. durch ein Verstopfen) frühzeitig erkennen und beheben zu können. Während der Messwert ("stall value") bei einer normalen Extrusion relativ konstant ist (t = 50 - 60), fällt er bei auftretenden Extrusionsproblemen zunächst ab (t = 60 - 75) und schwankt stark, wenn der Motor wegen der hohen Last Schritte auslässt (t = 75 - 90). Extrusionsprobleme werden erkannt, sobald die gleitende Standardabweichung ("moving sigma") einen bestimmten Wert überschreitet.

Bei auftretenden Extrusionsproblemen wird der Druckvorgang beispielsweise automatisch unterbrochen und eine Reinigungs-Prozedur durchgeführt, bei der das Druckmaterial im Druckkopf mehrmals vor und zurück bewegt wird, um mögliche Ablagerungen aus der Düse zu spülen, bevor der Druck an der gleichen Stelle fortgesetzt wird. Werden weiterhin Extrusionsprobleme festgestellt, wird die Reinigungs-Prozedur wiederholt bis der Nutzer nach dem dritten erfolglosen Versuch aufgefordert wird, die Düse zu wechseln.

Die Messung der rückwirkenden Motorspannung (back-EMF) unterstützt darüber hinaus die automatische Material-Einführung (siehe "Materialkassette und Versorgungseinheit"). Sobald sich die Motorlast erhöht, hat das Druckmaterial, das von der Vorschubeinheit zum Druckkopf befördert wird, den Motor erreicht und wird von diesem in die noch kalte Düse gedrückt. Somit ist das Druckmaterial vollständig eingeführt und muss von der Vorschubeinheit nicht weiter eingeführt werden.

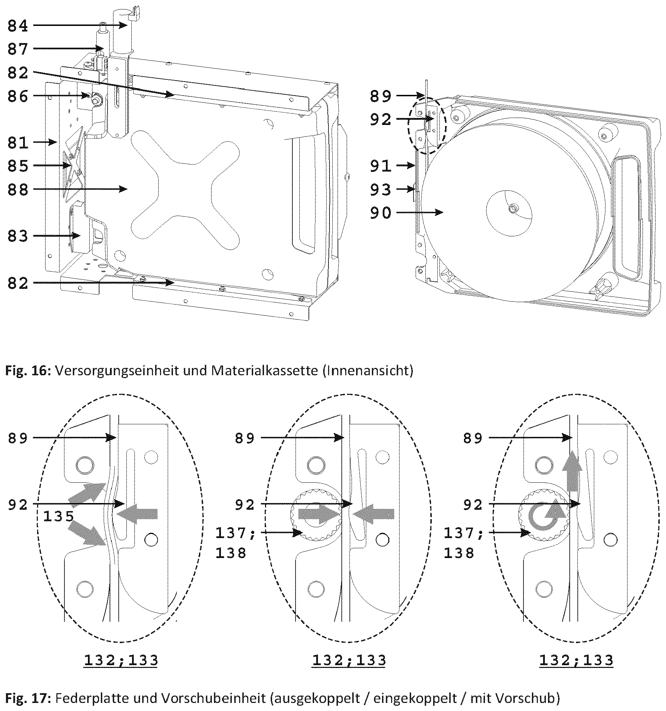

### Versorgungseinheit und Materialkassette (Fig. 16)

Die beiden Versorgungseinheiten (4, 5) für Modell- und Stützmaterial sind an beiden Seiten der Trennwand links des Bauraumes (2) befestigt. Sie umfassen einen Einschubschacht (81), zwei Paar Führungsschienen (82), eine Auswurfeinheit (83), eine Verriegelungseinheit (84), eine berührungslose Übertragungseinrichtung wie beispielsweise eine RFID-oder NFC-Einheit (85), eine Vorschubeinheit (86) und eine Adaptereinheit (87).
Das Druckmaterial (89) befindet sich auf einer Spule (90) im Inneren der Materialkassette (88) und verlässt diese über einen Führungskanal zwischen den beiden spritzgegossenen Außenschalen (91) am hinteren oberen Ende. Kurz vor der Austrittsöffnung befindet sich eine Aussparung für die Vorschubeinheit (86) sowie eine Federplatte aus Kunststoff (92), die das Druckmaterial (89) gegen die gegenüberliegende Wand des Führungskanals drückt und somit verhindert, dass es ins Innere der Materialkassette (88) fällt. An der Rückwand der Materialkassette (88) ist ein berührungslose Übertragungseinrichtung wie beispielsweise ein RFID- oder NFC-Chip (93) angebracht, der von der berührungslosen Übertragungseinrichtung wie beispielsweise der RFID- oder NFC-Einheit (85) an der Rückwand des Einschubschachtes (81) ausgelesen und beschrieben werden kann.
Die RFID-Technologie beispielsweise erlaubt das automatische und berührungslose Identifizieren von Objekten mit Radiowellen. Ein RFID-Chip besteht aus einem Mikrochip mit einer Speichereinheit und einer Antenne. Das RFID-Modul ist gleichzeitig Sender und Empfänger und kann die auf einem in der Nähe befindlichen RFID-Chip gespeicherten Daten auslesen bzw. manipulieren. Auch wenn andere Technologien für die Kommunikation zwischen Materialkassette und Drucker zum Einsatz kommen können, wird hier stellvertretend von der RFID-Technologie ausgegangen. Alternativ zu einem RFID-Chip können in allen Ausführungsformen aber jegliche geeignete berührungslose Übertragungseinrichtungen verwendet werden.

Wird eine Materialkassette (88) in eine Versorgungseinheit (4/5) eingeführt, greifen die Führungsschienen (82) an der oberen und unteren Innenseite des Einschubschachtes (81) in entsprechende Nuten in der Materialkassette (88) ein und die an der Rückwand des Einschubschachtes (81) befestigte Auswurfeinheit (83) wird gespannt. Sobald die richtige Position erreicht ist, schnappt die Verriegelungseinheit (84) in eine entsprechende Vertiefung an der Oberseite der Materialkassette (88) ein und fixiert diese somit in der richtigen Position.
Gleichzeitig wird das Druckmaterial (89) von der Vorschubeinheit (86) gegen die Federplatte (92) in der Materialkassette (88) gedrückt, so dass es sich von der Wand des Führungskanals löst und von der Vorschubeinheit (86) bewegt werden kann (siehe Fig. 17). Da die Lebensdauer der Federplatte (92) nur die Lebensdauer der Materialkassette (88) erreichen muss, ist der Verschleiß durch Reibung unproblematisch.
Sobald die Materialkassette (88) vollständig eingeführt wurde, liest die berührungslose Übertragungseinrichtung, insbesondere die RFID-Einheit (85) die darauf befindliche berührungslose Übertragungseinrichtung, insbesondere den RFID-Chip (93) aus, auf dem gegebenenfalls alle Informationen über das enthaltene Druckmaterial (89) gespeichert sind wie Seriennummer, Materialtyp, Haltbarkeitsdatum, Sicherheitscode, und verbleibende Materialmenge, die nach jedem Gebrauch aktualisiert wird. Dabei wird automatisch erkannt, wenn eine Materialkassette (88) eingelegt wird, um welchen Materialtyp es sich handelt, ob es noch verwendbar ist und ob es für den bevorstehenden Druck ausreicht. Zudem können die materialabhängigen Parameter wie die Drucktemperatur automatisch an die eingelegte Materialkassette (88) angepasst werden.

Bevor der Druck gestartet wird, wird das Druckmaterial (89) zunächst von der Vorschubeinheit (86) aus der Materialkassette (88) geschoben, über eine Adaptereinheit (87) in den Versorgungsschlauch (6, 7) eingeführt und in diesem zum Druckkopf (8, 9) weitergeleitet. Sobald das Druckmaterial (89) den Motor im Druckkopf (63) erreicht hat, was durch Messung der rückwirkenden Motorspannung ("back-EMF", siehe oben) erkannt wird, kann die Düse (77) aufgeheizt und der Druck gestartet werden. Während des Druckvorgangs laufen die beiden Motoren in der Vorschubeinheit (86) und im Druckkopf (63) synchron, um eine gleichmäßige Materialzufuhr zu gewährleisten.
Bevor die Materialkassette (88) wieder entnommen werden kann, muss das Druckmaterial (89) zunächst aus dem Versorgungsschlauch (6, 7) in die Materialkassette (88) zurückgeführt werden, indem es von der Vorschubeinheit (86) zurückgezogen wird. Sobald der Sensor in der Adaptereinheit (87) erkennt, dass das Druckmaterial (89) den Versorgungsschlauch (6, 7) vollständig verlassen hat, wird die Verriegelungseinheit (84) geöffnet, so dass die Materialkassette (88) von der Auswurfeinheit (83) leicht nach vorne gedrückt wird und aus der Versorgungseinheit (4/5) entnommen werden kann.

## Patentansprüche

1. Verfahren zur Bildung eines formstabilen, dreidimensionalen Objektes durch konsekutives oder kontinuierliches Auftragen und Aushärten eines formbaren Druckmaterials (89), insbesondere Verfahren zur Überwachung der Druckmaterialförderung, umfassend folgende Schritte:
- Betätigen eines Antriebsrades (138) eines Druckmaterialantriebs (137) zur Förderung des Druckmaterials,
- Messung der rückwirkenden Motorspannung des Druckmaterialantriebs (137),
- Vergleichen der rückwirkenden Motorspannung mit einem Sollwert oder einem Sollbereich, insbesondere Vergleichen einer gleitenden Standardabweichung der rückwirkenden Motorspannung mit einem Sollwert oder einem Sollbereich,
- Einleiten eines alternativen Betriebsmodus oder eines Reinigungsmodus, wenn der Wert oder die gleitende Standardabweichung der rückwirkenden Motorspannung vom Sollwert oder von dem Sollbereich abweicht.

2. Verfahren nach Anspruch 1, **dadurch gekennzeichnet,**
- **dass** durch Messung der rückwirkenden Motorspannung die Motorlast im Druckkopf (63) ermittelt wird, um Extrusionsprobleme wie beispielsweise ein Verstopfen zu erkennen,
- **dass** sobald die gleitende Standardabweichung der ermittelten Motorspannung einen bestimmten Wert überschreitet der Druckvorgang automatisch unterbrochen und eine Reinigungs-Prozedur durchgeführt wird, bei der das Druckmaterial (89) im Druckkopf (63) mehrmals vor und zurück bewegt wird, um mögliche Ablagerungen aus der Düse (80) zu spülen, bevor der Druck an der gleichen Stelle fortgesetzt wird.

3. Verfahren nach Anspruch 1 oder 2, **dadurch gekennzeichnet,**
- **dass** bevor der Druck gestartet wird, das Druckmaterial (89) zunächst von der Vorschubeinheit (86) aus der Materialkassette (88) geschoben, über eine Adaptereinheit (87) in den Versorgungsschlauch (6, 7) eingeführt und in diesem zum Druckkopf (8, 9) weitergeleitet wird,
- und **dass** sobald das Druckmaterial (89) den Motor im Druckkopf (63) erreicht hat, was durch Messung einer erhöhten rückwirkenden Motorspannung erkannt wird, die Düse (80) aufgeheizt wird und der Druck gestartet wird.
